# EUROPEAN PATENT APPLICATION

(11) **EP 4 613 675 A1**
(43) Date of publication of application: **10.09.2025**
(21) Application number: 25162095.1
(22) Date of filing: 06.03.2025
(51) Int. Cl.: B65G 13/07, B65G 13/071, B65G 13/073, B65G 43/08, B65G 43/10, B65G 47/26

(54) **METHODS, SYSTEMS, AND APPRATUSES FOR OPERATING A CONVEYOR**

(30) Priority: 06.03.2024 IN 202411015967
(71) Applicant: Intelligrated Headquarters LLC, Mason, OH 45040 (US)
(72) Inventor: PAINJANE, Sourabh Vishnu, Charlotte, 28202 (US); RAIKAR, Venkatesh, Charlotte, 28202 (US); SADASIVAN, Saravanan, Charlotte, 28202 (US)
(74) Representative: Haseltine Lake Kempner LLP

(57) **Abstract**

Various embodiments described herein relate to management of a conveyor system. In this regard, a conveyor system includes a first set of slave rollers defining a first conveying section and a second set of slave rollers defining a second conveying section separate from the first conveying section. The conveyor system further includes a motor driven roller including at least a fixed pulley, a first independent pulley, and a second independent pulley. In addition, the first independent pulley is coupled with the first set of slave rollers and the second independent pulley is coupled with the second set of slave rollers. Moreover, the motor driven roller is configured to drive at least one of the first set of slave rollers or the second set of slave rollers based on selective engagement of at least one of the first independent pulley or the second independent pulley.

## Description

### TECHNICAL FIELD

The present disclosure relates generally to a conveyor, and more particularly to methods, systems, and apparatuses for operating a conveyor.

### BACKGROUND

Generally, a conveyer may include a series of rollers that may rotate to traverse a load, for example boxes, supplies, materials, other kind of objects from one location to another location. Usually, conveyor includes multiple zones that may be controlled independently to traverse the load from one location to another. Typically, independently controlling the various zones of the conveyor may require independent electrical drive systems and control systems that may add to the cost of the overall conveyor.

However, the applicant has identified many technical challenges and difficulties associated with conventional conveyor. Through applied effort, ingenuity, and innovation, the Applicant has solved problems relating to conveyer by developing solutions embodied in the present disclosure, which are described in detail below.

### SUMMARY

The present disclosure provides a conveyor system comprising a first set of slave rollers defining a first conveying section; a second set of slave rollers defining a second conveying section separate from the first conveying section; and a motor driver roller (MDR) comprising at least a fixed pulley, a first independent pulley, and a second independent pulley, wherein the first independent pulley is coupled with the first set of slave rollers and the second independent pulley is coupled with the second set of slave rollers, and wherein the MDR is configured to drive at least one of the first set of slave rollers or the second set of slave rollers based on selective engagement of at least one of the first independent pulley or the second independent pulley.

The present disclosure further provides a method of controlling a conveyor system, comprising: defining a first conveying section by a first set of slave rollers; defining a second conveying section by a second set of slave rollers, wherein the second conveying section is defined separately from the first conveying section; arranging a motor driven roller (MDR) between the first conveying section and the second conveying section, wherein the MDR comprising at least a fixed pulley, a first independent pulley, and a second independent pulley; coupling the first independent pulley of the MDR with the first set of slave rollers; coupling the second independent pulley of the MDR with the second set of slave rollers; selectively engaging at least one of the first independent pulley or the second independent pulley with the fixed pulley of the MDR; and driving, through the MDR, at least one of the first set of slave rollers or the second set of slave rollers based on selective engagement of at least one of the first independent pulley or the second independent pulley.

The present disclosure further provides a pulley for a motor driven roller (MDR) of a conveyor system, wherein the pulley comprising at least a fixed pulley comprising a first surface, a second surface, a first bearing hub, a rotating shaft, and a first bearing, wherein the first surface of the fixed pulley function as a first edge of the smart pulley; a first independent pulley comprising a third surface, a fourth surface, a first electromagnet clutch, a first electromagnet, a second bearing, and a second bearing hub, wherein the third surface of the first independent pulley is coupled with the second surface of the fixed pulley; and a second independent pulley comprising a fifth surface, a sixth surface, a second electromagnet clutch, a second electromagnet, a third bearing, and a third bearing hub, wherein the fifth surface of the second independent pulley is coupled with the fourth surface of the first independent pulley and the sixth surface of the second independent pulley function as a second edge of the smart pulley.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
FIG. 1A illustrates an example conveyor system, in accordance with one or more embodiments described herein;
FIG. 1B illustrates an exemplary diagram that depicts conveyor system, in accordance with one or more embodiments described herein;
FIG. 2A to FIG. 2C illustrates various exemplary diagrams of a motor driven roller, in accordance with one or more embodiments described herein;
FIG. 2D illustrates an exemplary diagram that depicts a smart pulley for a motor driven roller, in accordance with one or more embodiments described herein;
FIG. 2E illustrates an exemplary diagram that depicts a sectional cut-out view of a smart pulley for a motor driven roller, in accordance with one or more embodiments described herein;
FIG. 2F illustrates an exemplary diagram that depicts another sectional cut-out view of a smart pulley for a motor driven roller, in accordance with one or more embodiments described herein;
FIG. 2G illustrates an exemplary diagram that depicts a cross-sectional view of a first part and a second part of a first independent pulley, in accordance with one or more embodiments described herein;
FIG. 3 illustrates a block diagram of an apparatus that includes a conveyer system, in accordance with one or more embodiments described herein;
FIG. 4A and FIG. 4B collectively illustrates various scenario-based diagrams for a conveyer system and a subsequent conveyer system, in accordance with one or more embodiments described herein;
FIG. 5A and FIG. 5B collectively illustrates scenario-based diagrams of a conveyer system and a subsequent conveyer system, , in accordance with one or more embodiments described herein;
FIG. 6 illustrates a diagram of a conveyer system, in accordance with one or more embodiments described herein;
FIG. 7 illustrates a flow chart that depicts various operations of a conveyor system, in accordance with one or more embodiments described herein; and
FIG. 8 illustrates a flow chart of a method of controlling a conveyor system, in accordance with one or more embodiments described herein.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments. The term "or" is used herein in both the alternative and conjunctive sense, unless otherwise indicated. The terms "illustrative," "example," and "exemplary" are used to be examples with no indication of quality level. Like numbers refer to like elements throughout.

The phrases "in an embodiment," "in one embodiment," "according to one embodiment," and the like generally mean that the particular feature, structure, or characteristic following the phrase can be included in at least one embodiment of the present disclosure and can be included in more than one embodiment of the present disclosure (importantly, such phrases do not necessarily refer to the same embodiment).

The word "exemplary" is used herein to mean "serving as an example, instance, or illustration." Any implementation described herein as "exemplary" is not necessarily to be construed as preferred or advantageous over other implementations.

If the specification states a component or feature "can," "may," "could," "should," "would," "preferably," "possibly," "typically," "optionally," "for example," "often," or "might" (or other such language) be included or have a characteristic, that particular component or feature is not required to be included or to have the characteristic. Such component or feature can be optionally included in some embodiments, or it can be excluded.

In one or more embodiments, the present disclosure provides for an "Internet-of-Things" or "IoT" platform for industrial process control and/or industrial process optimization that uses real-time accurate models and/or real-time control for sustained peak performance of an enterprise and/or an enterprise process. The IoT platform is an extensible platform that is portable for deployment in any cloud or data center environment for providing an enterprise-wide, top to bottom control of processes and/or assets. Further, the IoT platform of the present disclosure supports end-to-end capability to execute models against process data and/or to translate the output into actionable insights and/or real-time control, as detailed in the following description.

A conveyor system is provided that includes a first set of slave rollers defining a first conveying section, a second set of slave rollers defining a second conveying section separate from the first conveying section. The conveyor system further includes a motor driven roller (MDR) that includes at least a first independent pulley, a second independent pulley, and a fixed pulley. Moreover, the first independent pulley is coupled with the first set of slave rollers and the second independent pulley is coupled with the second set of slave rollers. In addition, the motor driven roller is configured to drive at least one of the first set of slave rollers or the second set of slave rollers based on selective engagement of at least one of the first independent pulley or the second independent pulley. Beneficially as compared to conventional approaches, the conveyor system can efficiently drive the first set of slave rollers or the second set of slave rollers based on presence of the package, such as to improve the overall efficiency of the conveyor system with reduced cost and without depending on the length of the package. In addition, the conveyor system can be used to control different conveying sections with low initial cost and reduced maintenance cost.

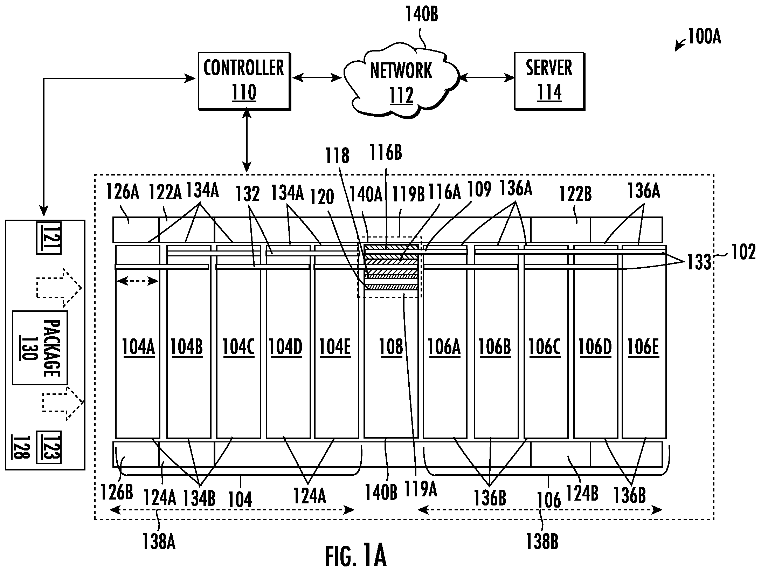

FIG. 1A illustrates an example conveyor system 102, according with one or more embodiments of the present disclosure. The conveyor system 102 may also be referred to as a roller conveyor system, a roller conveyor, and the like, which is configured to handle and move different type of packages, such as cardboard boxes, plastic crates, tires, and lightweight items from one place to another place. As shown in FIG. 1A, the conveyor system 102 includes a first set of slave rollers 104A, 104B, 104C, 104D, and 104E (hereinafter referred to as the first set of slave rollers 104), a second set of slave rollers 106A, 106B, 106C, 106D, and 106E (hereinafter referred to as the second set of slave rollers 106), a motor driven roller 108, and a smart pulley 109. Additionally, the conveyor system 102 is connected with a controller 110, a server 114, and a network 112. In some examples, the controller 110, which is further connected to the server 114 through the network 112. There is further shown that the smart pulley 109 of the motor driven roller 108 includes at least a first independent pulley 116A, a second independent pulley 116B, and a fixed pulley 118. There is further shown a first edge 119A and a second edge 119B of the smart pulley 109. There is further shown a belt 120, an upstream photo eye sensor 121, a first photo eye sensor 122A, a second photo eye sensor 122B, an upstream reflector 123, a first reflector 124A, a second reflector 124B, a first frame 126A, and a second frame 126B. There is further shown an upstream conveyor system 128, a package 130, a first set of belts 132, and a second set of belts 133.

In an example embodiment, the first set of slave rollers 104 may define a first conveying section. Each slave roller from the first set of slave rollers 104 is conical or cylindrical shaped and is configured to handle different type of packages, such as cardboard boxes, plastic crates, tires, and lightweight items. Optionally, each slave roller from the first set of slave rollers 104 can be made of a metal, fiber, polymer, plastic, and the like. In one or more embodiments, each slave roller from the first set of slave rollers 104 includes a first end 134A and a second end 134B, such as the first end 134A of each slave roller is arranged on the first frame 126A of the conveyor system 102 and the second end 134B of each slave roller is arranged on the second frame 126B of the conveyor system 102. Therefore, each of the first frame 126A as well as the second frame 126B are used to hold each slave roller from the first set of slave rollers 104. In an example, length of the first conveying section along a first axis 138A can vary from 24-inches to 30-inches. In another example, the length of the first conveying section along the first axis 138A can vary from 30-inches to 36-inches. In yet another example, the length of the first conveying section along the first axis 138A can vary from 36-inches to 48-inches.

In an example embodiment, the second set of slave rollers 106 may define a second conveying section separate from the first conveying section. In an implementation, each slave roller from the first set of slave rollers 104 as well as from the second set of slave rollers 106 may include pulley. In an example embodiment, each slave roller from the first set of slave rollers 104 as well as from the second set of slave rollers 106 may be referred to as slave rollers, which does not include any internal motor. Moreover, each slave roller from the first set of slave rollers 104 as well as from the second set of slave rollers 106 can be rotated in clockwise as well as anticlockwise direction. In one or more embodiments, each slave roller from the second set of slave rollers 106 includes a third end 136A and a fourth end 136B, such as the third end 136A of each slave roller is arranged on the first frame 126A of the conveyor system 102 and the fourth end 136B of each slave roller is arranged on the second frame 126B of the conveyor system 102. Therefore, each of the first frame 126A as well as the second frame 126B are used to hold each slave roller from the second set of slave rollers 106. In an example, a length of the second conveying section along a second x-axis 138B can vary from 24-inches to 30-inches. In another example, the length of the second conveying section along the second x-axis 138B can vary from 30-inches to 36-inches. In yet another example, the length of the second conveying section along the second x-axis 138B can vary from 36-inches to 48-inches. Optionally, the length of the second conveying section along the second x-axis 138B can be equal or different from the length of the first conveying section along the first x-axis 138A.

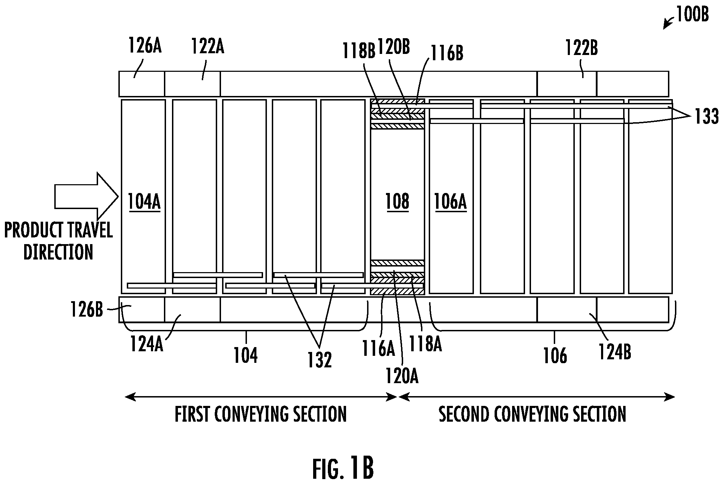

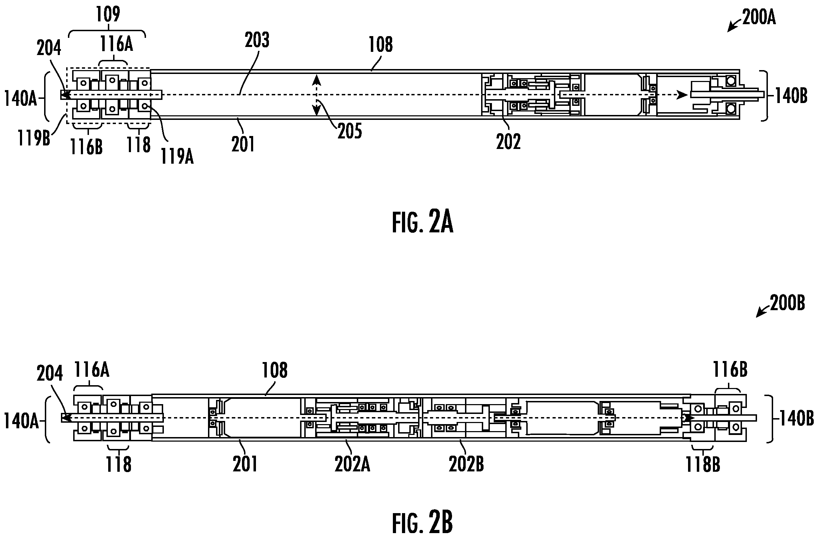

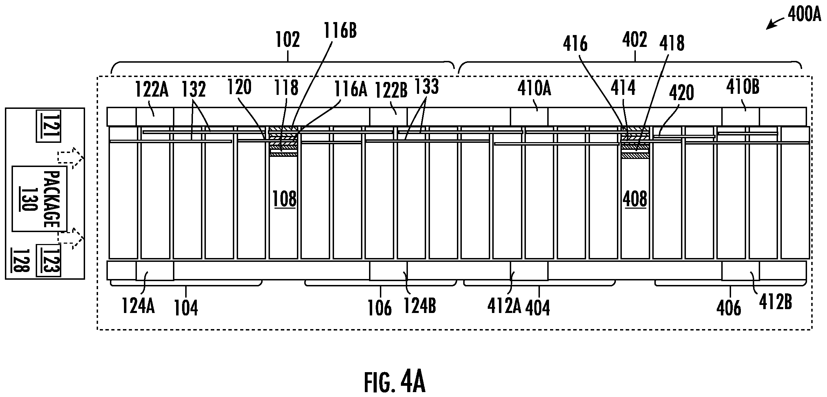

In an example embodiment, the motor driven roller (MDR) 108 may be coupled to the first set of slave roller 104 and the second set of slave roller 106. In some examples, the motor driven roller 108 may be configured to drive the first set of slave rollers 104 and the second set of slave roller 106. In an example embodiment, the motor driven roller 108 is configured to drive at least one of the first set of slave rollers 104 or the second set of slave rollers 106 based on selective engagement of at least one of the first independent pulley 116A or the second independent pulley 116B, as further shown and described in FIG. 4A, FIG. 4B, FIG. 5A, FIG. 5B, FIG. 6, and FIG. 7. Examples of implementations of each of the first independent pulley 116A and the second independent pulley 116B may include but are not limited to a 'o' shaped pulley, a 'v' shaped pulley, a poly 'o' belt pulley, a poly 'v' belt pulley, or a timer belt, without limiting the scope of the present disclosure. In an example embodiment, the motor driven roller 108 may correspond to the shaft of a motor itself. In another embodiment, the motor driven roller 108 may correspond to a set of pulleys that may be driven by the motor, without departing from the scope of the disclosure. Accordingly, the motor driven roller 108 may correspond to any mechanism that is capable of driving the first set of slave roller 104 and the second set of slave rollers 106. In one or more embodiments, the motor driven roller 108 includes a fifth end 140A and a sixth end 140B. In such embodiment, the fifth end 140A of the motor driven roller 108 is coupled with the first frame 126A of the conveyor system 102 and the sixth end 140B of the motor driven roller 108 is coupled with the second frame 126B of the conveyor system 102. Therefore, each of the first frame 126A as well as the second frame 126B provides support to the motor driven roller 108. Furthermore, in such embodiment, a belt 120 is coupled with the fixed pulley 118 of the motor driven roller 108, such as the belt 120 is used to rotate the motor driven roller 108 through the fixed pulley 118. In some examples, the scope of the disclosure is not limited to the motor driven roller 108 having one fixed pully. In an alternative embodiment, the motor driven roller 108 may include more than one fixed pulley 118, as is further described and depicted in FIG. 1B. The structure of the motor driven roller 108 is further described in conjunction with FIG. 2A to FIG. 2C.

The controller 110 may be embodied as one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an application specific integrated circuit (ASIC) or field programmable gate array (FPGA), or some combination thereof. Accordingly, in an example embodiment, the controller 110 may include a plurality of processors and signal processing modules. The plurality of processors may be embodied on a single electronic device or may be distributed across a plurality of electronic devices collectively configured to function as the circuitry of the conveyor system 102. The plurality of processors may be in operative communication with each other and may be collectively configured to perform one or more functionalities of the circuitry of the conveyor system 102, as described herein. In an example embodiment, the controller 110 may be configured to execute instructions stored in a memory or otherwise accessible to the controller 110. These instructions, when executed by the controller 110, may cause the circuitry of the conveyor system 102 to perform one or more of the functionalities, as described herein. Whether configured by hardware, firmware/software methods, or by a combination thereof, the controller 110 may include an entity capable of performing operations according to embodiments of the present disclosure while configured accordingly. Thus, for example, when the controller 110 is embodied as an ASIC, FPGA or the like, the controller 110 may include specifically configured hardware for conducting one or more operations described herein. Alternatively, as another example, when the controller 110 is embodied as an executor of instructions the instructions may specifically configure the controller 110 to perform one or more algorithms and operations described herein.

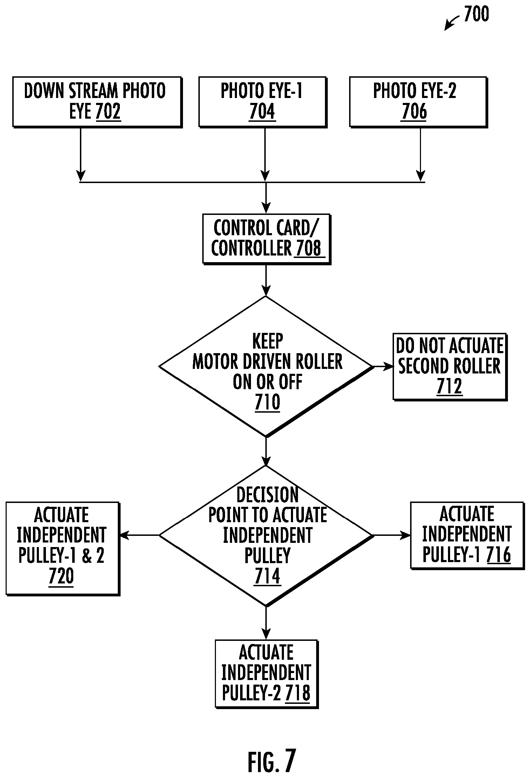

The controller 110 used herein may refer to a programmable microprocessor, microcomputer or multiple processor chip or chips that can be configured by software instructions (applications) to perform a variety of functions, including the functions of the various embodiments described above. In some devices, multiple processors may be provided dedicated to wireless communication functions and one processor dedicated to running other applications. Software applications may be stored in the internal memory before they are accessed and loaded into the processors. The processors may include internal memory sufficient to store the application software instructions. In many devices, the internal memory may be a volatile or nonvolatile memory, such as flash memory, or a mixture of both. The memory can also be located internal to another computing resource (e.g., enabling computer readable instructions to be downloaded over the Internet or another wired or wireless connection). In one or more embodiments, the controller 110 is configured to determine the presence of the package 130 and control the conveyor system 102. For example, the controller 110 is configured to determine the presence of the package 130 near the first set of slave rollers 104 and drive the motor driven roller 108 through the fixed pulley 118. Furthermore, the controller 110 is configured to determine the presence of the package 130 one the first set of slave rollers 104 and drive the second set of slave rollers 106. An exemplary implementation of the working of the controller 110 is further shown and described in FIG. 7.

In an embodiment, the network 112 may include a communication medium through which the conveyor system 102 may communicate with the server 114. Such a communication may be performed, in accordance with various wired and wireless communication protocols. Examples of such wired and wireless communication protocols include, but are not limited to, Transmission Control Protocol and Internet Protocol (TCP/IP), User Datagram Protocol (UDP), Hypertext Transfer Protocol (HTTP), File Transfer Protocol (FTP), ZigBee, EDGE, infrared (IR), IEEE 802.11, 802.16, 2G, 3G, 4G, 5G, 6G cellular communication protocols, and/or Bluetooth (BT) communication protocols. The network 112 may include, but is not limited to, the Internet, a cloud network, a Wireless Fidelity (Wi-Fi) network, a Wireless Local Area Network (WLAN), a Local Area Network (LAN), a telephone line (POTS), and/or a Metropolitan Area Network (MAN).

In various embodiments, the server 114 can include any type or quantity of one or more processors and one or more data storage devices comprising memory for storing and executing applications or software modules to execute the operation of the conveyor system 102. In one embodiment, the one or more processors and one or more data storage devices are embodied in the server 114, such as enterprise-level servers. For example, in an embodiment, the processors and data storage devices comprise any type or combination of application servers, communication servers, web servers, super-computing servers, database servers, file servers, mail servers, proxy servers, and/ virtual servers. Further, the one or more processors are configured to access the memory and execute processor-readable instructions, which when received and executed by the controller 110 to perform a plurality of functions of the conveyor system 102.

In one or more embodiments, the upstream photo eye sensor 121 is arranged on the upstream conveyor system 128, which is connected before the conveyor system 102, as shown in FIG. 1A. Moreover, the upstream conveyor system 128 is further connected with the controller 110. Examples of the upstream photo eye sensor 121 may include but are not limited to a photo sensor, a light sensor, a photodiode, a photoresistor, a phototransistor, a photovoltaic light sensor, and the like. The upstream photo eye sensor 121 is configured to determine the presence of the package 130 on the upstream conveyor system 128 and in a proximity region of the first set of slave rollers 104. Optionally, the proximity region can vary from 5 centimeter (cm) to 10 cm, from 10 cm to 15 cm, or 15 cm to 20, and the like without limiting the scope of the present disclosure. In an example, the upstream photo eye sensor 121 works along with the upstream reflector 123 to detect the presence of the package 130 on the upstream conveyor system 128 and near (e.g., 10 cm to 15 cm away from) the first set of slave rollers 104 of the conveyor system 102. In an example, if a photodiode is used as the upstream photo eye sensor 121, then the upstream photo eye sensor 121 is configured to operate in visible and near infrared spectrum with a wavelength range from 400 nanometers (nm) to 1100 nm. In an example, the upstream photo eye sensor 121 is configured to work at a first wavelength that ranges from 401 nm to 410 nm. However, the first wavelength of the upstream photo eye sensor 121 may vary depending on a type of sensor being used. Furthermore, the upstream photo eye sensor 121 may be configured to determine if the package 130 is present in proximity region of the upstream photo eye sensor 121, such as 10 cm to 15 cm away from the first set of slave rollers 104 of the conveyor system 102. Thereafter, the upstream photo eye sensor 121 is configured to transmit the upstream photo eye signal to the controller 110. An exemplary implementation of working of the upstream photo eye sensor 121 is further shown and described in FIG. 4A, FIG. 4B, FIG. 5A, FIG. 5B, FIG. 6, and FIG. 7.

The first photo eye sensor 122A is configured to determine the presence of the package 130 on the first set of slave rollers 104. In an implementation, the first photo eye sensor 122A is configured to work along with the first reflector 124A, such as the first photo eye sensor 122A is arranged on the first frame 126A and the first reflector 124A is arranged on the second frame 126B. Examples of the first photo eye sensor 122A may include but are not limited to a photo sensor, a light sensor, a photodiode, a photoresistor, a phototransistor, a photovoltaic light sensor, and the like. In one or more embodiments, the first photo eye sensor 122A is arranged in proximity region of the first set of slave rollers 104 of the conveyor system 102. Optionally, the proximity region can vary from 5 centimeter (cm) to 10 cm, from 10 cm to 15 cm, or 15 cm to 20, and the like without limiting the scope of the present disclosure. In addition, each of the first photo eye sensor 122A as well as the first reflector 124A can be arranged on other positions without limiting the scope of the present disclosure. In an implementation, if a photodiode is used as the first photo eye sensor 122A, then the first photo eye sensor 122A is configured to operate in visible and near infrared spectrum with a wavelength range from 400 nm to 1100 nm. However, the wavelength of the first photo eye sensor 122A may vary depending on a type of sensor being used. In an example, the first photo eye sensor 122A is configured to work at a second wavelength that ranges from 411 nm to 420 nm, which is different from the first wavelength of the upstream photo eye sensor 121 (e.g., ranges from 401 nm to 410 nm). In addition, the first photo eye sensor 122A along with the first reflector 124A are used to detect the presence of the package 130 on the first set of slave rollers 104. Furthermore, if the package 130 is present on the first set of slave rollers 104 of the conveyor system 102, then the first photo eye sensor 122A is configured to transmit the first photo eye signal to the controller 110. Herein, the first photo eye signal transmitted by the first photo eye sensor 122A is different from the upstream photo eye signal transmitted by the upstream photo eye sensor 121.

In one or more embodiments, the second photo eye sensor 122B is configured to determine the presence of the package 130 on the second set of slave rollers 106. In an implementation, if a photodiode is used as the second photo eye sensor 122B, then the second photo eye sensor 122B is configured to operate in visible and near infrared spectrum with a wavelength between approximately 400 nm and 1100 nm. However, the wavelength of the second photo eye sensor 122B may vary depending on a type of sensor being used. In an example, the second photo eye sensor 122B is configured to work at a third wavelength that ranges can ranges from 421 nm to 430 nm, which is different from the first wavelength (e.g., ranges from 411 nm to 420 nm) of the upstream photo eye sensor and also different from the second wavelength (e.g., ranges from 401 nm to 410 nm) of the first photo eye sensor 122A. In an implementation, the second photo eye sensor 122B is configured to work with the second reflector 124B, such as the second photo eye sensor 122B is arranged on the first frame 126A and the second reflector 124B is arranged on the second frame 126B. However, each of the second photo eye sensor 122B as well as the second reflector 124B can be arranged on other positions without limiting the scope of the present disclosure. In addition, the second photo eye sensor 122B along with the second reflector 124B are used to detect the presence of the package 130 on the second set of slave rollers 106. For example, if the package 130 is present on the second set of slave rollers 106 of the conveyor system 102, then the second photo eye sensor 122B is configured to transmit the second photo eye signal to the controller 110. Herein, the second photo eye signal transmitted by the second photo eye sensor 122B is different from the upstream photo eye signal as well as from the first photo eye signal. In addition, in response to the second photo eye signal, the controller 110 is configured to continue rotation of the motor driven roller 108 through the fixed pulley 118 and also configured to drive the second set of slave rollers 106 based on selective engagement of the second independent pulley 108B. An exemplary implementation of operation the conveyor system 102 is further shown and described in FIG. 4A, FIG. 4B, FIG. 5A, FIG. 5B, FIG. 6, and FIG. 7.

FIG. 1B illustrates an exemplary diagram 100B that depicts the conveyor system 102, in accordance with one or more embodiments of the present disclosure. As shown in FIG. 1B, the conveyor system 102 includes the first set of slave rollers 104, the second set of slave rollers 106, and the motor driven roller 108. The conveyor system 102 as shown in FIG. 1B is same as that shown in FIG. 1A, such as the conveyor system 102 of FIG. 1B includes all components as previously shown and described in FIG. 1A. In addition to that, the conveyor system 102 of FIG. 1B further includes a first fixed pulley 118A and a second fixed pulley 118B.

With reference to FIG. 1B there is shown that the first independent pulley 116A is arranged and located in proximity region of (e.g., 2 cm to 5 cm away from) the second frame 126B, while the second independent pulley 116B is arranged and located in proximity region of (e.g., 2 cm to 5 cm away from) the first frame 126A. In addition, the motor driven roller 108 includes two different fixed pulleys, such as the first fixed pulley 118A that is coupled with the first independent pulley 116A and the second fixed pulley 118B that is coupled with the second independent pulley 116B, as shown in FIG. 1B. An exemplary implementation of the motor driven roller 108 with two different fixed pulleys, such as the first fixed pulley 118A and the second fixed pulley 118B is further shown and described in FIG. 2B. Furthermore, each of the first fixed pulley 118A and the second fixed pulley 118B can be same as that of the first fixed pulley 118A of FIG. 1A.

In operation, the controller 110 (of FIG. 1A) is configured to determine the presence of the package 130 on the downstream conveyor system 128 and in proximity of the first set of slave rollers 104 (as previously described in FIG. 1A), such as based on a downstream photo eye signal, which is received from the upstream photo eye sensor 121. In an implementation, in response to the downstream photo eye signal, the controller 110 may be configured to transmit a first logical signal (e.g., either logic '1' or logic '0') to the motor driven roller 108, such as to rotate the motor driven roller 108. In other words, in response to the downstream photo eye signal, the controller 110 is configured to rotate the motor driven roller 108 through the first fixed pulley 118A, which is coupled with a belt 120A. Thereafter, the controller 110 is configured to transmit a second logical signal (e.g., either logic "1" or logic '0') to the motor driven roller 108. Herein the second logical signal is different from the first logical signal, such as the second logical signal is transmitted to control the motor driven roller 108 to selectively engage the first independent pulley 116A with the first fixed pulley 118A of the motor driven roller 108. Furthermore, as the motor driven roller 108 is already rotating, therefore, due to the rotation of the motor driven roller 108, the first independent pulley 116A also starts rotating. In addition, as the first independent pulley 116A is coupled with the first set of slave rollers 104 through the first set of belts 132, therefore due to the rotation of the first independent pulley 116A, each slave roller in the first set of slave rollers 104 also starts rotating, for example through the first set of belts 132. As a result, the motor driven roller 108 is configured to rotate each slave roller from the first set of slave rollers 104 to move the package 130 from the first set of slave rollers 104 towards the second set of slave rollers 106 through the motor driven roller 108.

Thereafter, the controller 110 is configured to determine the presence of the package 130 on the first set of slave rollers 104, for example based on a first photo eye signal, which is received from the first photo eye sensor 122 (as previously described in FIG. 1A). In an implementation, in response to the first photo eye signal, the controller 110 may be configured to transmit a third logical signal (e.g., either logic '1' or logic '0') to the motor driven roller 108. Herein the third logical signal is different from the first logical signal and also different from the second logical signal. Moreover, the third logical signal is transmitted to control the motor driven roller 108 to selectively engage the second independent pulley 116B with the second fixed pulley 118B of the motor driven roller 108. Furthermore, as the motor driven roller 108 is already rotating, therefore, due to the rotation of the motor driven roller 108, the second independent pulley 116B also starts rotating. In addition, as the second independent pulley 116B is already coupled with the second set of slave rollers 106 through the second set of belts 133, therefore due to the rotation of the second independent pulley 116B, each slave roller in the second set of slave rollers 106 also starts rotating, for example through the second set of belts 133. As a result, the package 130 can be shifted from the first set of slave rollers 104 on the second set of slave rollers 106 through the motor driven roller 108.

FIGs. 2A to 2C illustrates various exemplary diagrams of the motor driven roller 108, in accordance with one or more embodiments of the present disclosure. With reference to FIG. 2A, there is shown a diagram 200A that depicts the motor driven roller 108, which includes a body 201, an inbuilt motor, such as a motor 202, an axle 204, and the smart pulley 109. The smart pulley 109 (or a pulley) further include the first edge 119A and the second edge 119B, which are perpendicular to a third x-axis 203 and aligned towards a y-axis 205. Herein, the second edge 119B of the smart pulley 109 is arranged at the fifth end 140A of the motor driven roller 108. There is further shown that the smart pulley 109 further includes the first independent pulley 116A, the second independent pulley 116B, and the fixed pulley 118.

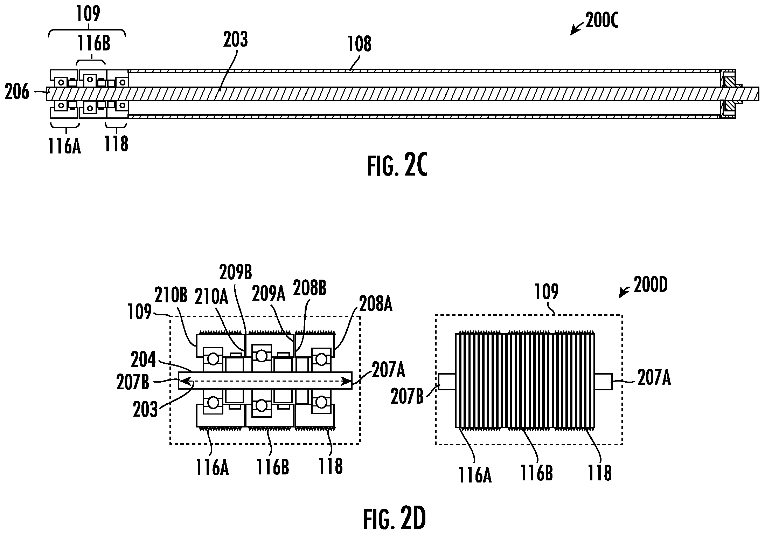

The motor driven roller 108 of FIG. 2A is a cylindrical shaped roller, which includes the body 201, which is aligned towards the third x-axis 203. In an implementation, the motor driven roller 108 may also be referred to as a roller. Optionally, the body 201 of the motor driven roller 108 can be made of a metal, fiber, polymer, or any other material without limiting the scope of the present disclosure. There is further shown that the axle 204 is inserted within the body 201 of the motor driven roller 108, such as inserted from the fifth end 140A of the motor driven roller 108 and aligned towards the third x-axis 203, as shown in FIG. 2A. As a result, the axle 204 is centrally aligned within the body 201 and also centrally aligned with the fifth end 140A of the motor driven roller 108. Furthermore, the axles 204 passes from the first edge 119A of the smart pulley 109 towards the second edge 119B of the smart pulley 109. There is further shown that, the first independent pulley 116A, the second independent pulley 116B, and the fixed pulley 118 of the smart pulley 109 are also coupled around the axle 204, which is further shown and described in FIG. 2D to FIG. 2F. There is further shown that the motor 202 is arranged within the body 201 of the motor driven roller 108 and aligned towards the third x-axis 203. Moreover, the motor 202 can be coupled with the axle 204 of the motor driven roller 108. There is further shown that the motor 202 is arranged near the sixth end 140B of the motor driven roller 108, for example, the motor 202 can be arranged around 2 cm to 4 cm away from sixth end 140B of the motor driven roller 108. Optionally the motor 202 can be arranged around 4 cm to 6 cm (or around 4 cm to 8 cm) away from sixth end 140B of the motor driven roller 108, without limiting the scope of the present disclosure.

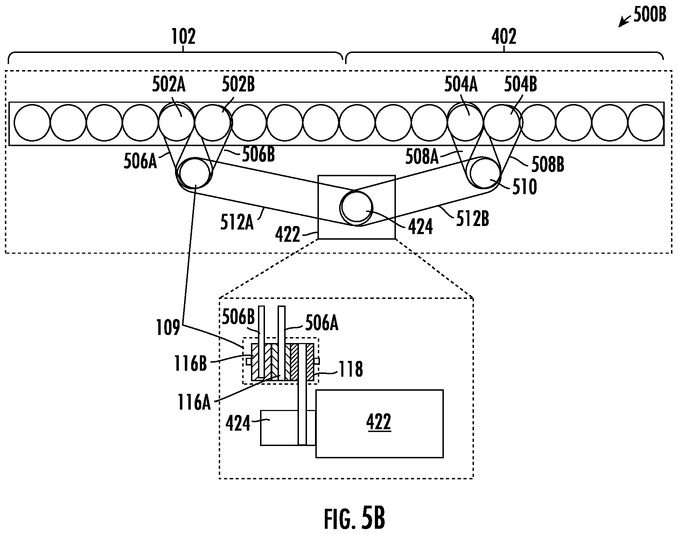

The smart pulley 109 includes the first independent pulley 116A, the second independent pulley 116B, and the fixed pulley 118. In an example, the smart pulley 109 may also be referred to as a pulley, a gear, and the like. Similarly, each of the first independent pulley 116A, the second independent pulley 116B, and the fixed pulley 118 may also be referred to as a drum, a gear, a pulley, and the like. In an implementation, the smart pulley 109 is externally coupled with the motor 202, as further shown and described in FIG. 5B. Furthermore, there is shown in FIG. 2A that the first independent pulley 116A, the second independent pulley 116B, and the fixed pulley 118 of the smart pulley 109 are arranged in proximity of the fifth end 140A of the motor driven roller 108. An exemplary implementation of arrangement of each of the first independent pulley 116A, the second independent pulley 116B, and the fixed pulley 118 is further shown and described in FIG. 2D to 2F. In an implementation, the motor driven roller 108 can include two or more smart pulleys without limiting the scope of the present disclosure.

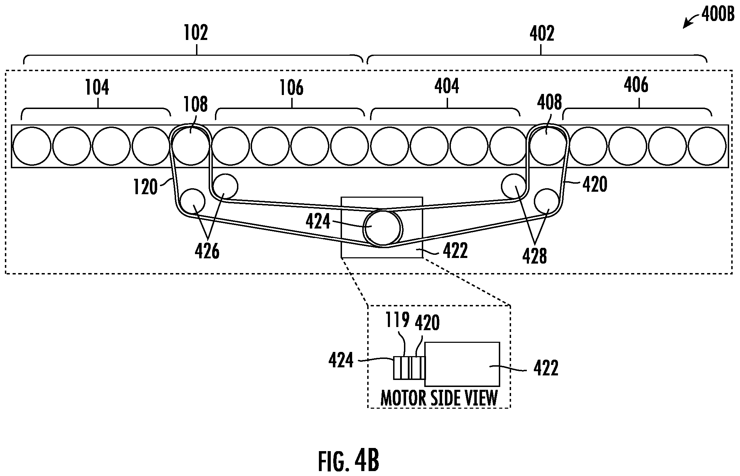

In an implementation, the motor 202 is a high toque electric motor, which is used to drive (i.e., rotate) the motor driven roller 108 through the smart pulley 109, such as based on the one or more instructions received from the controller 110, as further shown and described in FIG. 4A and FIG.4B. Examples of implementation of the motor 108 may include but are not limited to a stepper motor, a direct current motor, an alternate current motor, a servo motor, a direct drive motor, a linear motor, and the like. In an implementation, the motor driven roller 108 can include two or more motors without limiting the scope of the present disclosure. In addition, the axle 204 may be configured to drive each of the first independent pulley 116A, the second independent pulley 116B, the fixed pulley 118 through the motor 202. Examples of the axle 204 may include but are not limited to a rod, a pipe, a pole, a shaft, and the like.

With reference to FIG. 2B there is shown that the first independent pulley 116A is arranged adjacent to the fifth end 140A of the motor driven roller 108, while the second independent pulley 116B is arranged adjacent to the sixth end 140B (i.e., opposite to the fifth end 140A) of the motor driven roller 108. In addition, with reference to FIG. 2B, there is further shown that the motor driven roller 108 includes two fixed pulleys, such as the first fixed pulley 118A and the second fixed pulley 118B. Moreover, the first fixed pulley 118A is coupled with the first independent pulley 116A and is arranged adjacent to the fifth end 140A of the motor driven roller 108. Similarly, the second fixed pulley 118B is coupled with the second independent pulley 116B and is arranged adjacent to the sixth end 140B of the motor driven roller 108. In addition, with reference to FIG. 2C, there is shown that, the motor driven roller 108 does not include any inbuilt motor, therefore an external motor may be required to drive the motor driven roller 108 of FIG. 2C. Furthermore, an axle 206 of the exemplary diagram 200C is configured to drive each of the first independent pulley 116A, the second independent pulley 116B, the fixed pulley 118 through the external motor, which is further shown and described in FIG. 4A and 4B. In an example, axle 206 may be same as that of the axle 204 of FIG. 2A and FIG.2B. Optionally, the motor driven roller 108 of the exemplary diagram 200C may be referred to as a slave roller, a roller, and the like.

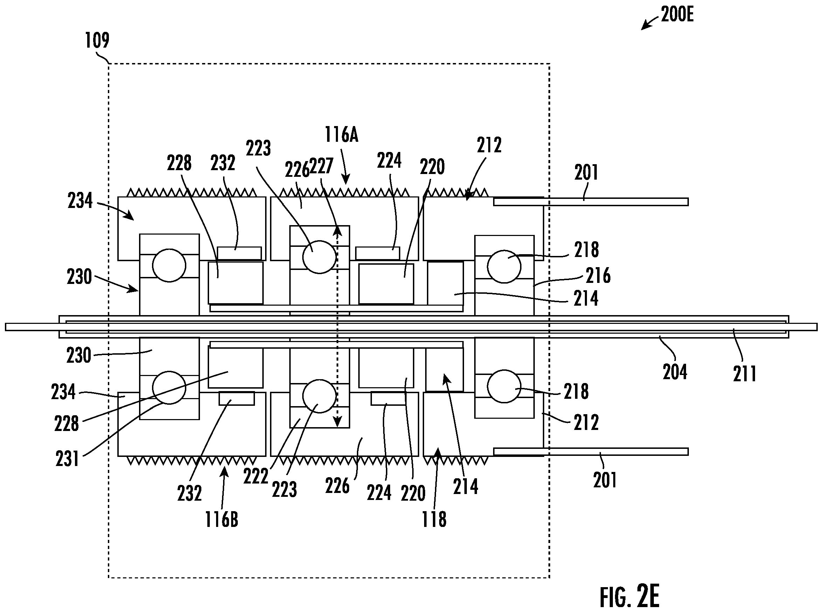

FIG. 2D illustrates an exemplary diagram 200D that depicts the smart pulley 109 for the motor driven roller 108, in accordance with one or more embodiments of the present disclosure. FIG. 2E illustrates an exemplary diagram 200E that depicts a sectional cut-out view of the smart pulley 109 for the motor driven roller 108, in accordance with one or more embodiments of the present disclosure.

With reference to FID. 2D, there is shown that the smart pulley 109 includes the fixed pulley 118, which includes the first independent pulley 116A, the second independent pulley 116B, and the fixed pulley 118. There is further shown that the fixed pulley 118 include a first surface 208A and a second surface 208B. There is further shown that the first independent pulley 116A include a third surface 209A and a fourth surface 209B. Similarly, the second independent pulley 116B include a fifth surface 210A and a sixth surface 210B. Moreover, each of the first surface 208A, the second surface 208B, the third surface 209A, the fourth surface 209B, the fifth surface 210A and a sixth surface 2B are perpendicular to the third x-axis 203, as shown in FIG. 2D.

With reference to FIG. 2D, there is shown that the fixed pulley 118 is coupled around the axle 204, such as the first surface 208A of the fixed pulley 118 is arranged and located at one end 207A of the axle 204. In addition, the first surface 208A of the fixed pulley 118 may function as the first edge 119A (of FIG. 1A) of the smart pulley 109. In addition, the first independent pulley 116A is also coupled with the fixed pulley 118 and coupled around the axle 204. For example, the third surface 209A of the first independent pulley 116A is coupled with the second surface 208B of the fixed pulley 118, as shown in FIG. 2D. There is further shown that the second independent pulley 116B is coupled with the first independent pulley 116A and also coupled around at an outermost end 207B of the axle 204. For example, the fifth surface 210A of the second independent pulley 116B is coupled with the fourth surface 209B of the first independent pulley 116A. Moreover, the sixth surface 210B of the second independent pulley 116B may function as the second edge 119B (of FIG. 1A) of the smart pulley 109, which is arranged and located at the outermost end 207B of the axle 204. Therefore, the first independent pulley 116A is arranged between the fixed pulley 118 and the second independent pulley 116B, as shown in FIG. 2D.

With reference to FIG. 2E, there is shown the body 201, the axle 204, a cable 211, a first bearing hub 212, a rotating shaft 214, and a first bearing 216. There is further shown a first electromagnet clutch 220, a second bearing 222, a first electromagnet 224, and a second bearing hub 226. With reference to FIG. 2E, there is further shown, a y-axis 227, a second electromagnet clutch 228, a third bearing 230, a second electromagnet 232, and a third bearing hub 234.

In one or more embodiments, if the axle 204 is a hollow axle, then the cable 211 passes through the axle 204. In an example, if the axle 204 is a rod-shaped axle, then the cable 211 can be arranged outside the motor driven roller 108. Optionally, the cable 211 may also be referred to as a wire, a fiber, and may be made of copper, aluminum, or any other conducting medium. In an example, the cable 211 is used to supply power from an external power source to the motor 202 of the motor driven roller 108, such as to drive the motor 202 of the motor driven roller 108.

In one or more embodiments, the fixed pulley 118 of the motor driven roller 108 includes the first bearing hub 212, the rotating shaft 214, and the first bearing 216. In an embodiment, the first bearing hub 212 is an outer portion of the first bearing 216. Furthermore, the first bearing hub 212 is a rotatable section, which is configured to rotate the motor driven roller 108. Moreover, the first bearing hub 212 is coupled with the body 201 of the motor driven roller 108.

In one or more embodiments, the rotating shaft 214 may be made from metal, polymer, fiber, or any other material. In an example, the rotating shaft 214 is a part of the fixed pulley 118. In another example, the rotating shaft 214 can be externally coupled with the fixed pulley 118. In an implementation, the rotating shaft 214 is configured to rotate the fixed pulley 118 of the motor driven roller 108.

In one or more embodiments, the first bearing 216 may also be referred to as angular contact bearing, a load bearing, and the like. In an example, diameter of the first bearing 216 along the y-axis 227 can vary from 30 millimeter (mm) to 35 mm. However, the diameter of the first bearing 216 can have any other value without limiting the scope of the present disclosure. There is further shown that the first bearing 216 includes one or more rotatable balls 218, which are arranged within the first bearing 216 and are configured to rotate the second bearing 222. Moreover, the first bearing 216 and the rotating shaft 214 are coupled with the first bearing hub 212. Therefore, each of the first bearing hub 212, the rotating shaft 214, and the first bearing 216 are collectively configured to rotate the motor driven roller 108 through the fixed pulley 118.

In one or more embodiments, the first electromagnet clutch 220 is coupled with the rotating shaft 214 of the motor driven roller 108. Examples of the first electromagnet clutch 220 may include but are not limited to an electromagnetic clutch, a bearing clutch, a fluid clutch, a friction clutch, a single plate clutch, a multiplate clutch, and the like. In an implementation, the first electromagnet clutch 220 is inactive in the absence of electro-magnetic field and is configured to get activated in the presence of electro-magnetic field.

In one or more embodiments, the second bearing 222 may be similar or different from the first bearing 216. In an example, diameter of the second bearing 222 along the y-axis 227 can vary from 40 mm to 50 mm, which is higher than the diameter (i.e., 30 mm to 35mm) of the first bearing 216. However, the diameter of the second bearing 222 along the y-axis 227 can have any other value without limiting the scope of the present disclosure. In an implementation, the second bearing 222 is arranged in proximity of the first electromagnet clutch 220, for example 1 mm to 2 mm away from the first electromagnet clutch 220, as shown in FIG. 2E. There is further shown that the second bearing 222 includes one or more rotatable balls 223, which are arranged within the second bearing 222 and are configured to rotate the second bearing 222.

In one or more embodiments, the first electromagnet 224 is referred to as a magnet that includes coils, such as when electric current passing through the coils, then the coils start producing magnetic field. Furthermore, in normal operation, the first electromagnet 224 is not coupled with the first electromagnet clutch 220. However, the first electromagnet 224 is coupled with the second bearing hub 226. In an example, the second bearing hub 226 is made of polymer and may also be referred to as a poly-v bearing hub assembly, a poly-o bearing hub assembly, and the like. Moreover, structure and properties of the second bearing hub 226 may be same as that of the first bearing hub 212. In an embodiment, the second bearing hub 226 is an outer portion of the second bearing 222. Furthermore, the second bearing hub 226 is a rotatable section, which is configured to rotate the second independent pulley 116B.

In one or more embodiments, the second electromagnet clutch 228 of the second independent pulley 116B may be same as that of the first electromagnet clutch 220 of the first independent pulley 116A. However, the structure of the second electromagnet clutch 228 can be different from the structure of the first electromagnet clutch 220 without limiting the scope of the present disclosure. In addition, diameter of the third bearing 230 along the y-axis 227 can vary from 30 millimeter (mm) to 35 mm, which is smaller than the diameter of the second bearing 222. However, the diameter of the third bearing 230 can have any other value without limiting the scope of the present disclosure. There is further shown that the third bearing 230 includes one or more rotatable balls 218, which are arranged within the third bearing 230 and are configured to rotate the third bearing 230. Furthermore, structure and properties of the second electromagnet 232 are also similar as that of the first electromagnet 224. In addition, the second electromagnet 232 is attached on the third bearing hub 234 of the second independent pulley 116B. Furthermore, in normal operation, the second electromagnet clutch 228 is coupled with the rotating shaft 214 of the motor driven roller 108, while not coupled with the second electromagnet 232.

In one or more embodiments, the upstream photo eye sensor 121 is configured to determine the presence of the package 130 on the upstream conveyor system 128 and in a proximity region of the first set of slave rollers 104, as previously described in FIG. 1A. Thereafter, the upstream photo eye sensor 121 is configured to transmit the upstream photo eye signal to the controller 110. In an implementation, in response to the downstream photo eye signal, the controller 110 is configured to transmit a first logical signal (e.g., either logic '1' or logic '0') to the motor driven roller 108, due to which the rotating shaft 214 starts rotating. In addition, the rotating shaft 214 is configured to drive the motor driven roller 108, such as through the first bearing 216 and the first bearing hub 212, which is further connected to the belt 120A. Thereafter, the controller 110 is configured to transmit a second logical signal (e.g., either logic '1' or logic '0') to the motor driven roller 108, as previously described in FIG. 1B. In an implementation, the second logical signal is transmitted to control the motor driven roller 108, such as to activate the first electromagnet 224 of the first independent pulley 116A. As a result, the first electromagnet 224 gets activated and starts generating electro-magnetic field. Furthermore, due to effect of the as generated electro-magnetic field, the first electromagnet clutch 220 gets engaged with the first electromagnet 224. As a result, the first independent pulley 116A also gets engaged with the rotating shaft 214 of the fixed pully 118. Furthermore, due to the rotation of the rotating shaft 214, the first independent pulley 116A also starts rotating, such as through the first electromagnet clutch 220 and the first electromagnet 224. In an implementation, the first electromagnet clutch 220 is configured to rotate the first independent pulley 116A through the second bearing 222. Furthermore, the first independent pulley 116A is coupled with the first set of slave rollers 104 (of FIG. 1A), for example through the first set of belts 132, which are coupled around the second bearing hub 226. Therefore, due to the rotation of the first independent pulley 116A, each slave roller in the first set of slave rollers 104 also starts rotating, for example through the first set of belts 132. As a result, the first independent pulley 116A along with the motor driven roller 108 is configured to rotate each slave roller from the first set of slave rollers 104 to move the package 130 from the first set of slave rollers 104 towards the second set of slave rollers 106 through the motor driven roller 108.

In one or more embodiments, the controller 110 is further configured to determine the presence of the package 130 on the first set of slave rollers 104, for example based on a first photo eye signal, which is received from the first photo eye sensor 122 (as previously described in FIG. 1A and 1B). In an implementation, in response to the first photo eye signal, the controller 110 may be configured to transmit a third logical signal (e.g., either logic '1' or logic '0') to the motor driven roller 108. Herein the third logical signal is different from the first logical signal as well as from the second logical signal. In an implementation, the third logical signal is transmitted to control the motor driven roller 108, such as to activate the second electromagnet 232. As a result, the second electromagnet 232 gets activated and starts generating electro-magnetic field. Furthermore, due to the effect of the as generated electro-magnetic field, the second electromagnet clutch 228 gets engaged with the second electromagnet 232. Therefore, the second independent pulley 116B also gets engaged with the rotating shaft 214 of the fixed pully 118. Furthermore, due to the rotation of the rotating shaft 214, the second independent pulley 116B also starts rotating, such as through the second electromagnet clutch 228 and the second electromagnet 232. In an implementation, the second electromagnet clutch 228 may be configured to rotate the second independent pulley 116B through the third bearing 230. Furthermore, the second independent pulley 116B is coupled with the second set of slave rollers 106, for example through the second set of belts 133. Therefore, due to the rotation of the second independent pulley 116B, each slave roller in the second set of slave rollers 106 also starts rotating, for example through the second set of belts 133. As a result, the second independent pulley 116B along with the motor driven roller 108 is configured to rotate each slave roller from the second set of slave rollers 106 through the third bearing hub 234.

In one or more embodiments, if the package 130 is not present on the first set of slave rollers 104 (of FIG. 1A), then the first photo eye sensor 122 may not transmit the first photo eye signal. Therefore, in response to the absence of the package 130 on the first set of slave rollers 104, the controller 110 will not receive the first photo eye signal and configured to transmit a fourth logical signal (e.g., either logic "1" or logic '0') to the motor driven roller 108. Herein the fourth logical signal is different from each of the first logical signal, the second logical signal, and the third logical signal. Furthermore, the fourth logical signal is transmitted to control the motor driven roller 108, such as to deactivate the first electromagnet 224 of the first independent pulley 116A. Therefore, the first electromagnet 224 will stop generating the electro-magnetic field. Furthermore, due to the absence of the electro-magnetic field, the first electromagnet 224 gets disengaged from the first electromagnet clutch 220. As a result, the motor driven roller 108 is configured to disengage the first independent pulley 116A from the rotating shaft 214 of the fixed pulley 118, due to which the first electromagnet clutch 220 stops rotating the first independent pulley 116A. Therefore, due to disengagement from the rotating shaft 214, the first independent pulley 116A stop rotating and each slave roller from the first set of slave rollers 104 also stop rotating. Beneficially as compared to conventional approaches, the first independent pulley 116A can be used to precisely control and precisely drive each slave roller from the first set of slave rollers 104.

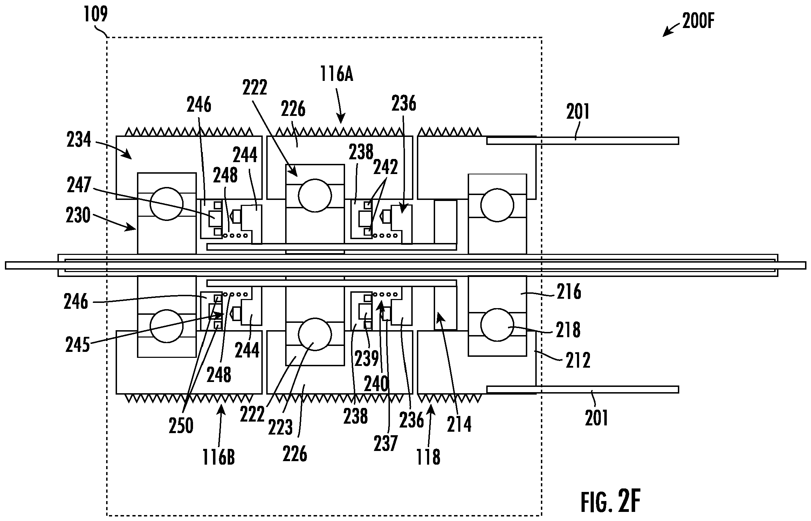

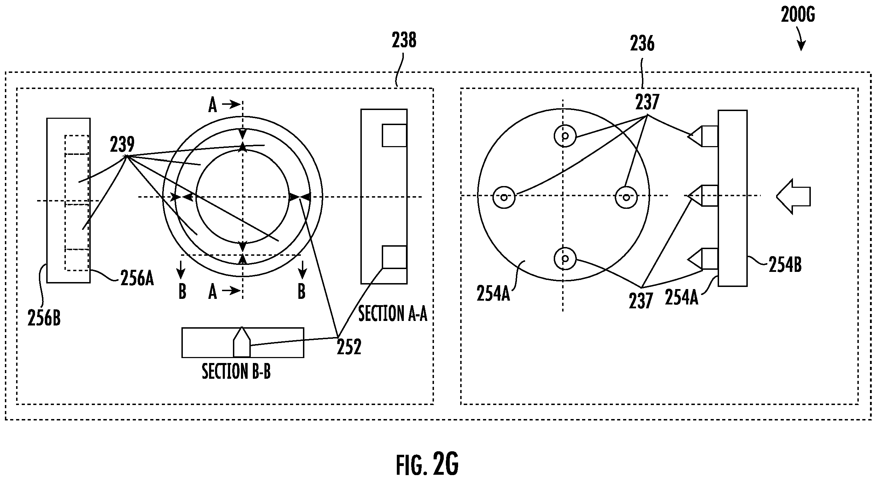

FIG. 2F illustrates an exemplary diagram 200F that depicts another sectional cut-out view of the smart pulley 109 for the motor driven roller 108, in accordance with one or more embodiments of the present disclosure. As shown in FIG. 2F, the motor driven roller 108 includes the first independent pulley 116A, the second independent pulley 116B, the fixed pulley 118, the axle 204, and the cable 211. There is further shown that the first independent pulley 116A include a first part 236, a second part 238, a first set of springs 240, a first set of electromagnets 242. In addition, the first part 236 includes a first set of protrusions 237 while the second part 238 includes a first set of grooves 239, which is further shown and described in FIG. 2G. Furthermore, the second independent pulley 116B include a third part 244, a fourth part 246, a second set of springs 248, and a second set of electromagnets 250. Moreover, the third part 244 include a second set of protrusions 245 while the fourth part 246 include a second set of grooves 247, which is further shown and described in FIG. 2G.

In one or more embodiments, the first independent pulley 116A includes the first part 236A and the second part 238, such as the first part 236 and the second part 238 are facing each other, as shown in FIG. 2F. In addition, the first part 236 is coupled with the rotating shaft 214 of the fixed pulley 118 while the second part 238 is coupled with the second bearing hub 226. In an example, each of the first part 236A and the second part 238 may be made from metal, polymer, fiber, and the like. In an implementation, the second part 238 of the first independent pulley 116A includes the first set of electromagnets 242. In an example, the first set of electromagnets 242 can have similar properties as that of the first electromagnet 224 and the second electromagnet 232 of FIG. 2E. Furthermore, the first independent pulley 116A may also include the first set of springs 240 which are configured to be connected between the first part 236 and the second part 238. In an example, the first set of springs 240 are flexible in nature and can be made from flexible metal, polymer, and the like. In addition, in normal operation, the first set of springs 240 are in expanded position, due to which the second part 238 in not engaged with the first part 236, as shown in FIG. 2F. As a result, in normal operation, the first independent pulley 116A remains in steady state and does not rotate.

In one or more embodiments, the second independent pulley 116B includes the third part 244 and the fourth part 246. Furthermore, the third part 244 is coupled with the rotating shaft 214 and the fourth part 246 is coupled with the fourth bearing hub 234, as shown in FIG. 2F. Optionally, the third part 244 can have similar properties as that of the first part 236 while the fourth part 246 can have similar properties as that of the second part 238 respectively. In an implementation, the fourth part 246 includes the second set of electromagnets 250, which can have similar properties as that of the first electromagnet 224 and the second electromagnet 232. Furthermore, the second independent pulley 116B may also include the second set of spring 248, which have similar properties as that of the first set of springs 240, such as the second set of spring 248 are coupled between the third part 244 and the fourth part 246. In addition, in normal operation, the second set of spring 248 are in expanded position, due to which the third part 244 in not engaged with the fourth part 246. As a result, in normal operation, the second independent pulley 116B remains in steady state and does not rotate.

In one or more embodiments, the upstream photo eye sensor 121 is configured to determine the presence of the package 130 on the upstream conveyor system 128 and in a proximity region of the first set of slave rollers 104, as previously described in FIG. 1A. Thereafter, the upstream photo eye sensor 121 is configured to transmit the upstream photo eye signal to the controller 110. In an implementation, in response to the downstream photo eye signal, the controller 110 is configured to transmit a first logical signal (e.g., either logic '1' or logic '0') to the motor driven roller 108, due to which the rotating shaft 214 starts rotating, as previously described in FIG. 2F. In addition, the rotating shaft 214 is configured to drive the motor driven roller 108, such as through the first bearing 216 and the first bearing hub 212, which is further connected to the belt 120A. Thereafter, the controller 110 is configured to transmit a second logical signal (e.g., either logic '1' or logic '0') to the motor driven roller 108, as previously described in FIG. 1B. In an implementation, the second logical signal is transmitted to control the motor driven roller 108, such as to activate the first set of electromagnets 242 of the first independent pulley 116A. As a result, the first set of electromagnets 242 starts generating electro-magnetic field. In an implementation, once the first set of electromagnets 242 starts generating electro-magnetic field, then the first set of protrusions 237 of the first part 236 gets engaged within the first set of grooves 239 of the second part 238. In an implementation, in the presence of the as generated electro-magnetic field, the first set of springs 240 also gets compressed, due to which the first set of protrusions 237 of the first part 236 gets engaged within he first set of grooves 239 of the second part 238. Furthermore, as the first part 236 is already coupled with the rotating shaft 126, therefore, due to the engagement of the first part 236 with the second part 238, the first independent pulley 116A also gets engaged with the rotating shaft 214 of the fixed pulley 118. As a result, the first independent pulley 116A starts rotating, which further drive each slave roller from the first set of slave rollers 104 (of FIG. 1A).

In one or more embodiments, the controller 110 is configured to determine the presence of the package 130 on the first set of slave rollers 104, for example based on a first photo eye signal, which is received from the first photo eye sensor 122 (as previously described in FIG. 1A and 1B). In an implementation, in response to the first photo eye signal, the controller 110 may be configured to transmit a third logical signal (e.g., either logic '1' or logic '0') to the motor driven roller 108. Herein the third logical signal is different from the first logical signal and different from the second logical signal. In an implementation, the third logical signal is transmitted to control the motor driven roller 108, such as to activate the second set of electromagnets 250 of the second independent pulley 116B, due to which the second set of electromagnets 250 starts generating electro-magnetic field. In an implementation, once the second set of electromagnets 250 starts generating electro-magnetic field, then the second set of protrusions 245 of the third part 244 gets engaged within the second set of grooves 247 of the fourth part 246. In an implementation, in the presence of as generated electro-magnetic field, the second set of springs 248 also gets compressed, due to which the second set of protrusions 245 of the third part 244 gets engaged within the second set of grooves 247 of the fourth part 246. Furthermore, as the third part 244 is already coupled with the rotating shaft 126, therefore, due to the engagement of the third part 244 with the fourth part 246, the second independent pulley 116B also gets engaged with the rotating shaft 214 of the fixed pulley 118. As a result, the second independent pulley 116B starts rotating, which further drive each slave roller from the second set of slave rollers 106 (of FIG. 1A).

FIG. 2G illustrates an exemplary diagram 200G that depicts a cross-sectional view of the first part 236 and the second part 238 of the first independent pulley 116A, in accordance with one or more embodiments of the present disclosure. As shown in FIG. 2G, the first part 236 includes the first set of protrusions 237 and the first part 236 includes the first set of grooves 239 as well as one or more stopper 252, such as the one more stopper 252 are configured to stop the first set of protrusions 237 of the first part 236 within the first set of grooves 239 of the second part 238. In an implementation, shape at an end side of each of the first set of protrusions 237 is conical shape, while shape at an end side of each of the one more stopper 252 is bevel shape. As a result, when the first set of protrusions 237 exactly within the first set of grooves 239 till the one more stopper 252 in receiver, then due to the conical shape at the end of each protrusion and each stopper, the first set of protrusions 237 starts rotating. There is further shown that the first part 236 is circular in shape, which includes a first side 254A and a second side 254B, such as the first set of protrusions 237 are grown on the first side 254A of the first part 236. There is further shown that the first set of protrusions 237 are equally spaced from the center of the first side 254A of the first part 236. There is further shown that the second part 238 is also circular in shape, which includes a third side 256A and a fourth side 256B, such as the first set of grooves 239 are created on the third side 256A of the second part 238. There is further shown that the first set of grooves 239 are also equally spaced from the center of the first side 254A of the first part 236. However, dimensions as well as arrangement of the first set of protrusions 237 as well as the first set of grooves 239 may vary without limiting the scope of the present disclosure. Herein, the exemplary diagram 200G depicts the cross-sectional view of the first part 236 and the second part 238. Furthermore, the cross-sectional view is same for the third part 244 and the fourth part 246 of FIG. 2F.

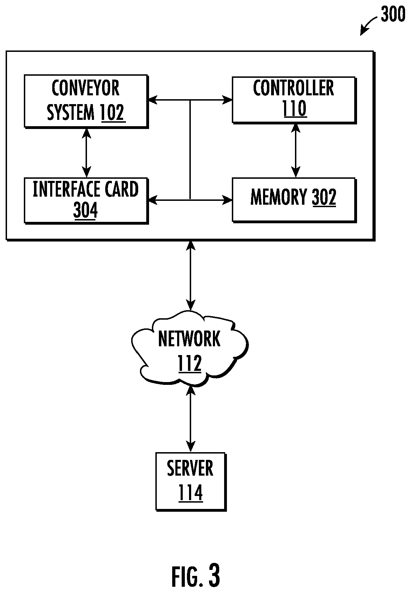

FIG. 3 illustrates a block diagram of an apparatus 300 that includes the conveyer system 102, in accordance with one or more embodiments of present disclosure. FIG. 3 illustrates the block diagram that depicts an apparatus 300 that includes the conveyer system 102. There is further shown that the apparatus 300 includes the controller 110, a memory 302, and an interface card 304.

The apparatus 300 can include a plurality of conveyer systems, such as the controller 110 is configured to control operation of each conveyer system based on one or more instructions received from the server 114 through the network 112. Moreover, each conveyer system from the plurality of conveyer systems includes a motor drive roller similar as that of the motor driven roller 108. Optionally, each conveyer system from the plurality of conveyer systems can work in a similar way as that of the conveyer system 102.

The memory 302 is configured to store one or more instructions to control operation of the conveyer system 102, and to control other conveyer systems. Optionally, the one more instruction can be embodied by one or more processor-executable software modules that reside on the server 114. By way of example but not limitation, the memory 302 can include a random-access memory (RAM), read-only memory (ROM), electrically erasable programmable read-only memory (EEPROM), FLASH memory, disk storage, magnetic storage devices, or the like. Disk storage, as used herein, includes compact disc (CD), laser disc, optical disc, digital versatile disc (DVD), floppy disk, and the like or other storage devices that store data magnetically or optically with lasers. Combinations of the above types of media are also included within the scope of the terms non-transitory computer-readable and processor-readable media. Additionally, any combination of instructions stored on the one or more non-transitory processor-readable or computer-readable media can be referred to herein as a computer program product.

The interface card 304 may also be referred to as a network interface card, a communication interface, and the like. Moreover, the interface card 304 is configured to provide an interface between the conveyer system 102, the controller 110, and the memory 302. In an implementation, the interface card 304 can also be used to provide communication between the apparatus 300 and the server 114 through the network 112 (of FIG. 1A). According to various embodiments, the interface card 304 can include one or more cellular radios, Bluetooth, WiFi, near-field communication radios, Ethernet, or other appropriate communication devices for transmitting and receiving information between two points of communication.

FIG. 4A and FIG. 4B collectively illustrates various scenario-based diagrams for the conveyer system 102 and a subsequent conveyer system 402, in accordance with one or more embodiments of the present disclosure. FIG. 4A illustrates a diagram 400A that depicts a front view of the conveyer system 102, which is coupled with the subsequent conveyer system 402. Moreover, FIG. 4B illustrates a diagram 400B that depicts a side view of the conveyer system 102 that is connected with the subsequent conveyer system 402. There is further shown that the subsequent conveyer system 402 includes a third set of slave rollers 404, a fourth set of slave rollers 406, and a subsequent motor driven roller 408. With reference to FIG. 4B, there is further shown, a third photo eye sensor 410A, a fourth photo eye sensor 410B, a third reflector 412A, a fourth reflector 412B, a third independent pulley 414, a fourth independent pulley 416, a subsequent fixed pulley 418, and a subsequent belt 420. In addition, with reference to FIG. 4B, there is shown, an external motor 422, a shaft 424, a first set of pulleys 426, and a second set of pulleys 428.

The subsequent conveyer system 402 is same as that of the conveyer system 102. Therefore, the third set of slave rollers 404 and the fourth set of slave rollers 406 also same as that of the first set of slave rollers 104 and the second set of slave rollers 106. In addition, the subsequent motor driven roller 408 is same as that of the motor driven roller 108 of FIG. 1A to FIG. 2C. Similarly, the third photo eye sensor 410A and the fourth photo eye sensor 410B have similar properties as that of the first photo eye sensor 122A and the second photo eye sensor 122B respectively. Furthermore, the third reflector 412A and the fourth reflector 412B have similar properties as that of the first reflector 124A and the second reflector 124B respectively. In an implementation, each of the third photo eye sensor 410A along with the third reflector 412A are configured to determine the presence of the package 130 on the third set of slave rollers 404. Similarly, the fourth photo eye sensor 410B along with the fourth reflector 412B are configured to determine the presence of the package 130 on the fourth set of slave rollers 406. In addition, the third independent pulley 414 and the fourth independent pulley 416 have similar properties as that of the first independent pulley 116A and the second independent pulley 116B. Similarly, the subsequent fixed pulley 418 have similar properties as that of fixed pulley 118. In addition, the subsequent belt 420 is also configured to work in a similar way as that of the belt 120. In an embodiment, the belt 120 is coupled with the fixed pulley 118 of the motor driven roller 108 as well as with the shaft 424 of an external motor 422, as shown in FIG. 4B. In an implementation, the belt 120 is used to couple the motor driven roller 108 with the external motor 422 and through the first set of pulleys 426. In such implementation, the belt 120 is coupled with the motor driven roller 108 as well as with the shaft 424 of the external motor 422 through the first set of pulleys 426. Therefore, the belt 120 is beneficial to drive (i.e., rotate) the motor driven roller 108 using the external motor 422 and through the fixed pulley 118. Examples of implementations of the external motor 422 may include, but are not limited to a stepper motor, a direct current motor, an alternate current motor, a servo motor, a direct drive motor, a linear motor, and the like. Herein, the external motor 422 is further connected with the controller 110 (of FIG. 1A)

In operation, the controller 110 (of FIG. 1A) is configured to receive an upstream photo eye signal from the upstream photo eye sensor 121 based on the presence of the package 130 near the first set of slave rollers 104. In an implementation, in response to the downstream photo eye signal, the controller 110 is configured to transmit a first logical signal (e.g., either logic '1' or logic '0') to drive the external motor 422, such as to rotate the motor driven roller 108 through the first set of pulleys 426 that are coupled with the shaft 424 of the external motor 422. Thereafter, the controller 110 is configured to transmit a second logical signal (e.g., either logic '1' or logic '0') to the motor driven roller 108. In an implementation, the second logical signal is transmitted to control the motor driven roller 108, such as to activate the first electromagnet 224 of the first independent pulley 116A. As a result, the first electromagnet 224 gets activated and starts generating electro-magnetic field. Furthermore, due to effect of as generated electro-magnetic field, the first electromagnet clutch 220 gets engaged with the first electromagnet 224. As a result, the first independent pulley 116A gets selectively engaged with the rotating shaft 214 of the fixed pully 118, as previously described in FIG. 2F and 2G. Furthermore, due to the rotation of the rotating shaft 214, the first independent pulley 116A also starts rotating, such as through the first electromagnet clutch 220 and the first electromagnet 224. As a result, the first independent pulley 116A along with the motor driven roller 108 is configured to rotate each slave roller from the first set of slave rollers 104 to move the package 130 from the first set of slave rollers 104 towards the second set of slave rollers 106 through the motor driven roller 108.

The controller 110 is further configured to receive a first photo eye signal from the first photo eye sensor 122A based on the presence of the package 130 on the first set of slave rollers 104. Thereafter, in response to the first photo eye signal, the controller 110 is configured to continue rotation of the motor driven roller 108 through the fixed pulley 118 as well as through the first set of pulleys 426 that are coupled with the external motor 422, as shown in FIG. 4B. In an implementation, in response to the first photo eye signal, the controller 110 may be configured to transmit a third logical signal (e.g., either logic '1' or logic '0') to the motor driven roller 108, as previously described in FIG. 2F and 2G. In an implementation, the third logical signal is transmitted to control the motor driven roller 108, such as to activate the second electromagnet 232. As a result, the second electromagnet 232 gets activated and starts generating electro-magnetic field. Furthermore, due to the effect of the as generated electro-magnetic field, the second electromagnet clutch 228 gets engaged with the second electromagnet 232. Therefore, the second independent pulley 116B also gets engaged with the rotating shaft 214 of the fixed pully 118. Furthermore, due to the rotation of the rotating shaft 214, the second independent pulley 116B also starts rotating, as previously described in FIG. 2F and FIG. 2G. In addition, the second independent pulley 116B is already coupled with the second set of slave rollers 106, for example through the second set of belts 133. Therefore, due to the rotation of the second independent pulley 116B, each slave roller in the second set of slave rollers 106 also starts rotating, for example through the second set of belts 133. As a result, the second independent pulley 116B along with the motor driven roller 108 is configured to drive each slave roller from the second set of slave rollers 106, such as to move the package 130 from first set of slave rollers 104 towards the second set of slave rollers 106 and also from the second set of slave rollers 106 towards the subsequent conveyor system 402. Thereafter, the controller 110 is further configured to receive a second photo eye signal from the second photo eye sensor 122B based on the presence of the package 130 on the second set of slave rollers 106. Furthermore, in response to the second photo eye signal, the controller 110 is further configured to determine, through the first photo eye sensor 122A, if the package 130 is present on the first set of slave rollers 104. In addition, in response to presence of the package 130, the controller 110 is further configured to control the motor driven roller 108 to continue engagement of the first independent pulley 116A and continue rotation of each slave roller from the first set of slave rollers 104.

In one or more embodiments, if the package 130 is not present on the first set of slave rollers 104 (of FIG. 1A), then the first photo eye sensor 122 may not transmit the first photo eye signal. Therefore, in response to the absence of the package 130 on the first set of slave rollers 104, the controller 110 may be configured to transmit a fourth logical signal (e.g., either logic '1' or logic '0') to the motor driven roller 108. Herein the fourth logical signal is different from each of the first logical signal, the second logical signal, and the third logical signal. Furthermore, the fourth logical signal is transmitted to control the motor driven roller 108, such as to deactivate the first electromagnet 224 of the first independent pulley 116A. Therefore, the first electromagnet 224 will stop generating the electro-magnetic field. Furthermore, due to the absence of the electro-magnetic field, the first electromagnet 224 gets disengaged from the first electromagnet clutch 220. As a result, the motor driven roller 108 is configured to disengage the first independent pulley 116A from the rotating shaft 214 of the fixed pulley 118, due to which the first electromagnet clutch 220 stops rotating the first independent pulley 116A. Therefore, due to disengagement from the rotating shaft 214, the first independent pulley 116A stop rotating and each slave roller from the first set of slave rollers 104 also stop rotating. Beneficially as compared to conventional approaches, the first independent pulley 116A can be used to precisely control and precisely drive each slave roller from the first set of slave rollers 104. However, due to the rotation of the second independent pulley 116B, the package 130 can be shifted from the second set of slave rollers 106 towards the subsequent conveyor system 402, while each slave roller from the first set of slave rollers 104 remains in steady state and does not rotate.

In response to the second photo eye signal from the second photo eye sensor 122B based on the presence of the package 130 on the second set of slave rollers 106, the controller 110 is configured to rotate the subsequent motor driven roller 408 through the subsequent fixed pulley 418. In an example, the subsequent motor driven roller 408 is rotated through the second set of pulleys 428 that are coupled with the shaft 424 of the motor 422 through the subsequent belt 420, as shown in FIG. 4B. In addition, in response to the second photo eye signal, the controller 110 is configured to control the subsequent motor driven roller 408 to selectively engage the third independent pulley 414 (similarly as that of the first independent pulley 116A). Furthermore, based on the selective engagement of the third independent pulley 514, the controller 110 is configured to rotate each slave roller from the third set of slave rollers 404, such as to move the package 130 from the second set of slave rollers 106 towards the third set of slave rollers 404. Thereafter, the controller 110 is further configured to receive a third photo eye signal from the third photo eye sensor 410A, which works along with the third reflector 412A. Furthermore, in response to the third photo eye signal, the controller 110 is configured to determine that the package 130 is present on the third set of slave rollers 404. As a result, the controller 110 is configured to continue rotation of each slave roller from the third set of slave rollers 404, such as to move the package 130 from the third set of slave rollers 404 to the fourth set of slave rollers 406. In addition, the controller 110 is configured to control the subsequent motor driven roller 408 to selectively engage the fourth independent pulley 416 (similarly as that of the second independent pulley 116B). Thereafter, (similarly as that of the fourth independent pulley 416, the controller 110 is configured to rotate each slave roller from the fourth set of slave rollers 406, such as to move the package 130 from the third set of slave rollers 404 towards the fourth set of slave rollers 406. In addition, due to the presence of the package 130 on the third set of slave rollers 404, the controller 110 is configured to continue rotation of each slave roller from the third set of slave rollers 404.

The controller 110 is further configured to receive a fourth photo eye signal from the fourth photo eye sensor 410B, which works along with the fourth reflector 412B. Thereafter, in response to the fourth photo eye signal, the controller 110 is configured to determine that the package 130 is present on the fourth set of slave rollers 406. As a result, the controller 110 is configured to continue rotation of each slave roller from the fourth set of slave rollers 406. However, due to the absence of any package on the third set of slave rollers 404, the controller 110 may not receive the third photo eye signal. As a result, the controller 110 is configured to control the subsequent motor driven roller 408 to disengage the third independent pulley 414 and stop rotation of each slave roller from the third set of slave rollers 404.

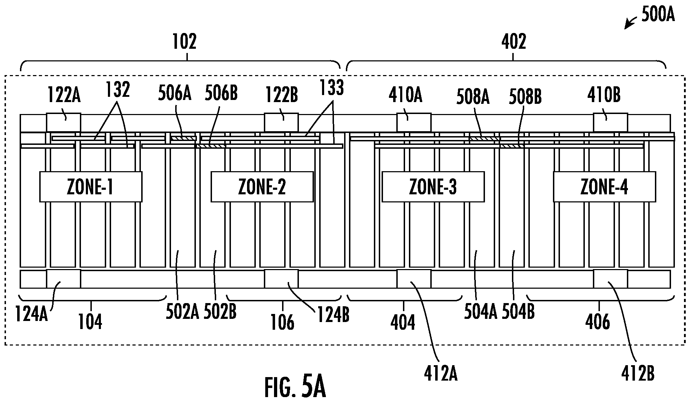

FIG. 5A and FIG. 5B collectively illustrates scenario-based diagrams of the conveyer system 102 and the subsequent conveyer system 402, according to the present disclosure. FIG. 5A illustrates a diagram 500A that depicts a front view of the conveyer system 102, which is coupled with the subsequent conveyer system 402. Moreover, FIG. 5B illustrates a diagram 500B that depicts a side view of the conveyer system 102 that is coupled with the subsequent conveyer system 402. With reference to FIG. 5A and FIG. 5B there is shown a third roller 502A, a fourth roller 502B, a fifth roller 504A, a sixth roller 504B, a first belt 506A, a second belt 506B, a third belt 508A, a fourth belt 508B, a subsequent smart pulley 510, a fifth belt 512A, and a sixth belt 512B.

The conveyer system 102 includes the third roller 502A, which is further connected to the first set of slave rollers 104. The conveyer system 102 further includes the fourth roller 502B, which is further connected to the second set of slave rollers 106, as shown in FIG. 5A and 5B. Moreover, each of the third roller 502A and the fourth roller 502B may corresponds to the motor driven roller 108 of FIG. 2A to FIG. 2C. Optionally, each of the third roller 502A and the fourth roller 502B may corresponds to a slave roller from the first set of slave rollers 104 or from the second set of slave rollers 106 (i.e., a roller that does not include the smart pulley 109). In addition, the third roller 502A as well as the fourth roller 502B are connected to the shaft 424 of the external motor 422 through the smart pulley 109 of FIG. 2A to FIG. 2F. Herein, the smart pulley 109 is not coupled directly with the third roller 502A as well as with the fourth roller 502B, but the smart pulley 109 is arranged separately from the third roller 502A as well as from the fourth roller 502B, as shown in FIG. 5B. There is further shown that the third roller 502A is coupled with the first independent pulley 116A of the smart pulley 109 through the first belt 506A while the fourth roller 502B is coupled with the second independent pulley 116B of the smart pulley 109 through the second belt 506B. Furthermore, the fixed pulley 118 of the smart pulley 109 is connected to the external motor 422 through the fifth belt 512A, as shown in FIG. 5B.

Similarly, the subsequent conveyer system 402 includes the fifth roller 504A, which is further coupled to the third set of slave rollers 404. The subsequent conveyer system 402 further includes the sixth roller 504B, which is further coupled to the fourth set of slave rollers 406, as shown in FIG. 5A and FIG. 5B. Moreover, each of the fifth roller 504A and the sixth roller 504B may corresponds to the motor driven roller 108 of FIG. 2A to FIG. 2C. Optionally, each of the fifth roller 504A and the sixth roller 504B may corresponds to a slave roller from the first set of slave rollers 104 or from the second set of slave rollers 106 (i.e., a roller that does not include the smart pulley 109). Moreover, the fifth roller 504A as well as the sixth roller 504B are coupled to the shaft 424 of the external motor 422 through the subsequent smart pulley 510, as shown in FIG. 5B. In an example, the subsequent smart pulley 510 includes all the components as that of the smart pulley 109. Moreover, the fifth roller 504A is coupled to the subsequent smart pulley 510 through the third belt 508A while the sixth roller 504B is coupled to the subsequent smart pulley 510 through the fourth belt 508B. Furthermore, the subsequent smart pulley 510 is also coupled to the external motor 422 through the sixth belt 512B, as shown in FIG. 5B.

In operation, the controller 110 (of FIG. 1A) is configured to receive an upstream photo eye signal from the upstream photo eye sensor 121 (of FIG. 1A) based on the presence of the package 130 in proximity of the first set of slave rollers 104, as previously explained in FIG. 4A and FIG. 4B. In an implementation, in response to the downstream photo eye signal, the controller 110 is configured to transmit a first logical signal (e.g., either logic '1' or logic '0') to drive the external motor 422, such as to rotate the smart pulley 109, for example through the fifth belt 512A. Thereafter, in response to the upstream photo eye signal, the controller 110 is configured to transmit a second logical signal (e.g., either logic '1' or logic '0') to the smart pulley 109, such as to selectively engage the first independent pulley 116A of the smart pulley 109 with the fixed pulley 118, due to which the first independent pulley 116A starts rotating, as previously explained in FIG. 2F and FIG. 2G. Furthermore, rotation of the first independent pulley 116A of the smart pulley 109 results in rotation of the first belt 506A, due to which the third roller 502A starts rotating. Furthermore, due to the rotation of the third roller 502A, each slave roller in the first set of slave rollers 104 also starts rotating. As a result, the package 130 is shifted towards the first set of slave rollers 104. Thereafter, the controller 110 is further configured to receive a first photo eye signal from the first photo eye sensor 122A based on the presence of the package 130 on the first set of slave rollers 104, as previously described in FIG. 4A and FIG. 4B. Furthermore, in response to the first photo eye signal, the controller 110 is configured to continue rotation of the third roller 502A, due to which each slave roller in the first set of slave rollers 104 also keeps rotating. Thereafter, in response to the first photo eye signal, the controller 110 is configured to transmit a third logical signal (e.g., either logic '1' or logic '0') to the smart pulley 109, such as to selectively engage the second independent pulley 116B of the smart pulley 109 with the fixed pulley 118, due to which the fourth roller 502B starts rotating through the second belt 506B. Furthermore, due to the rotation of the fourth roller 502B, each slave roller in the second set of slave rollers 106 also starts rotating. As a result, the package 130 is shifted from the first set of slave rollers 104 of the first conveying section towards the second set of slave rollers 106 in the second conveying section.

The controller 110 is configured to receive a second photo eye signal from the second photo eye sensor 122B based on the presence of the package 130 on the second set of slave rollers 106. Furthermore, in response to the second photo eye signal, the controller 110 is further configured to control the subsequent smart pulley 510, such as to rotate the fifth roller 504A through the third belt 508A. Herein, operation of the subsequent smart pulley 510 is controlled by the controller 110 in a similar way as that of controlling the operation of the smart pulley 109. Furthermore, due to the rotation of the fifth roller 504A, each slave roller in the third set of slave rollers 404 also starts rotating. As a result, the package 130 is shifted from the second set of slave rollers 106 in second conveying section towards the third set of slave rollers 404 in the third conveying section. Therefore, the controller 110 is further configured to receive a third photo eye signal from the third photo eye sensor 410A based on the presence of the package 130 on the third set of slave rollers 404. In addition, in response to the third photo eye signal, the controller 110 is further configured to selectively engage the subsequent smart pulley 510 that results in rotation of the fourth belt 508B, due to which the sixth roller 504B starts rotating. Furthermore, due to the rotation of the sixth roller 504B, each slave roller in the fourth set of slave rollers 406 also starts rotating. As a result, the package 130 is shifted from the third set of slave rollers 404 in third conveying section towards the fourth set of slave rollers 406 in the fourth conveying section.

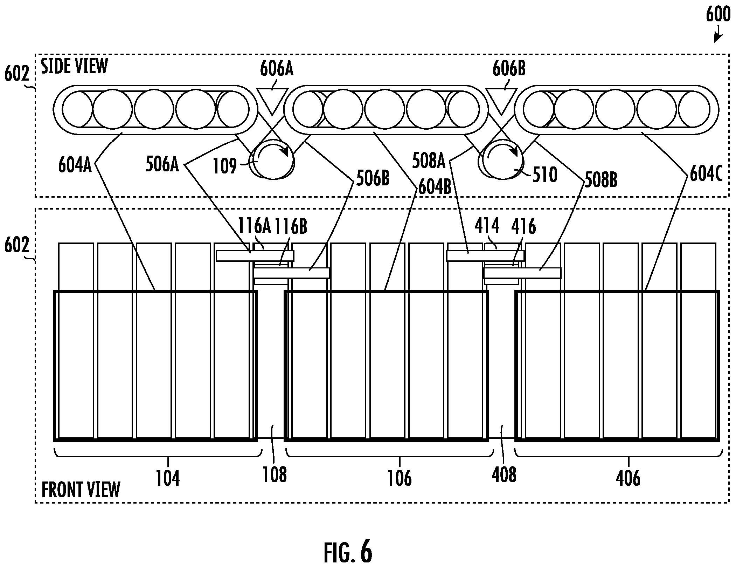

FIG. 6 illustrates a diagram 600 of a conveyer system 602, in accordance with one or more embodiments of present disclosure. FIG. 6 illustrates a diagram 600 that depicts a front view as well as a side view of the conveyer system 602. There is further shown a first conveyer belt 604A, a second conveyer belt 604B, a third conveyer belt 604C, a first gap filler 606A, and a second gap filler 606B.

The first conveyer belt 604A is configured to collectively couple each slave roller in the first set of slave rollers 104, the second conveyer belt 604B is configured to collectively couple each slave roller in the second set of slave rollers 106, and the third conveyer belt 604C is configured to collectively couple each slave roller in the third set of slave rollers 404. With reference to FIG. 6, there is further shown a side view, which depicts that the motor driven roller 108 and the subsequent motor driven roller 408 are not aligned with the first set of slave rollers 104, the second set of slave rollers 106, and the third set of slave rollers 404. Due to which, there exists a first gap between the height of the motor driven roller 108 and the first set of slave rollers 104 and also with the height of the second set of slave rollers 106. Similarly, there exists a second gap between the height of the subsequent motor driven roller 408 and the second set of slave rollers 106 and also with the height of the third set of slave rollers 404. In an example, the first gap filler 606A is arranged in the first gap and the second gap filler 606B is arranged in the second gap, such as to fill the corresponding gaps.

In operation, the controller 110 (of FIG. 1A) is configured to rotate the motor driven roller 108 through the fixed pulley 118 as well as control the motor driven roller 108 to selectively engage the first independent pulley 116A, due to which the first independent pulley 116A starts rotating. Furthermore, rotation of the first independent pulley 116A of the smart pulley 109 results in rotation of the first belt 506A, due to which each slave roller in the first set of slave rollers 104 also starts rotating, such as through the first conveyer belt 604A. Thereafter, the controller 110 is further configured to receive a first photo eye signal, such as to continue rotation of the first independent pulley 116A of the smart pulley 109, due to which each slave roller in the first set of slave rollers 104 also keeps rotating, for example due to the rotation of the first belt 506A and the rotation of the first conveyer belt 604A. Thereafter, in response to the first photo eye signal, the controller 110 is configured to control the smart pulley 109 to selectively engage the second independent pulley 116B of the smart pulley 109, due to which each slave roller in the second set of slave rollers 106 also starts rotating through the second conveyer belt 604B. As a result, the package 130 is shifted from the first set of slave rollers 104 of the first conveying section towards the second set of slave rollers 106 in the second conveying section.

The controller 110 is further configured to receive a second photo eye signal based on the presence of the package 130 in the second conveying section. Furthermore, in response to the second photo eye signal, the controller 110 is further configured to control the subsequent smart pulley 510 to rotate the subsequent motor driven roller 408 and control the subsequent motor driven roller 408 to selectively engage the subsequent smart pulley 510, due to which each slave roller in the third set of slave rollers 404 also starts rotating through the third conveyer belt 604C. As a result, the package 130 is shifted from the second set of slave rollers 106 towards the third set of slave rollers 404.

FIG. 7 illustrates a flow chart 700 that depicts various operations of the conveyor system 102, in accordance with one or more embodiments of the present disclosure. As shown in FIG. 7, the flow chart 700 includes steps 702-to-720. In an implementation, the controller 110 of the conveyer system 102 is configured to execute the steps 702-to-720.

In one or more embodiments, if the package 130 is present on the upstream photo eye sensor 121 and in proximity region the first set of slave rollers 104 of the conveyor system 102, then at step 702, the upstream photo eye sensor 121 does not receive a reflected signal of the first wavelength from the upstream reflector 123. Optionally, the proximity region can vary from 5 centimeter (cm) to 10 cm, from 10 cm to 15 cm, or 15 cm to 20, and the like without limiting the scope of the present disclosure. As a result, the upstream photo eye sensor 121 is configured to generate an upstream photo eye signal and transmit the upstream photo eye signal to the controller 110. In an implementation, the upstream photo eye sensor 121 is configured to receive the reflected signal of the first wavelength continuously from the upstream reflector 123, which depicts that the package 130 is not present in the proximity region of the upstream photo eye sensor 121. As a result, if the upstream photo eye sensor 121 does not detect the presence of the package 130, then the step 702 is not executed. Furthermore, if the package 130 is present on the first set of slave rollers 104, then the first photo eye sensor 122A will not receive a reflected signal of the second wavelength from the first reflector 124A. Thereafter, at step 704, a first photo eye signal is generated by the first photo eye sensor 122A, which is further configured to transmit the first photo eye signal to the controller 110. In addition, if the package 130 is present on the second set of slave rollers 106, then the second photo eye sensor 122B will not receive a reflected signal of the third wavelength from the second reflector 124B. As a result, at step 706, a second photo eye signal is generated by the second photo eye sensor 122B, which is further configured to transmit second photo eye signal to the controller 110.

In an implementation, if the package 130 is present in proximity (e.g., of (e.g., 10 cm to 15 cm away from) the first set of slave rollers 104, then at step 708, the controller 110 is configured to receive the upstream photo eye signal (as generated at step 702) from the upstream photo eye sensor 121. However, if the package 130 is present on the first set of slave rollers 104, then at step 708, the controller 110 is configured to receive the first photo eye signal (as generated at step 704) from the first photo eye sensor 122A. Furthermore, if the package 130 is present on the second set of slave rollers 104, then at step 708, the controller 110 is further configured to receive the second photo eye signal (as generated at step 706) from the second photo eye sensor 122B.

Furthermore, at step 710, the controller 110 is configured to determine if any of the upstream photo eye signal, the first photo eye signal, or the second photo eye signal is received or not. In addition, at step 710, the controller 110 is further configured to determine, whether to drive the motor driven roller 108 or not, such as based on any of the upstream photo eye signal, the first photo eye signal or the second photo eye signal. In an implementation, at step 710, if no package is detected in any of the first set of slave rollers 104 or the second set of slave rollers 106, then the controller 110 does not receive any of the upstream photo eye signal, the first photo eye signal, or the second photo eye signal. Therefore, at step 712 is executed, where the controller 110 is configured to not to rotate the motor driven roller 108. However, if at step 710, the package 130 (or any other package) is detected on any of the first set of slave rollers 104 or the second set of slave rollers 106, then the controller 110 receives any of the upstream photo eye signal, the first photo eye signal, or the second photo eye signal. Thereafter, at step 714, the controller 110 is configured to determine, which independent pulley need to be driven. In an example, if at step 710, the package 130 is present in the first set of slave rollers 104, then at step 716, the controller is configured to transmit a second logical signal (e.g., either logic "1" or logic '0') to the motor driven roller 108, as previously explained in FIG. 2F and FIG. 2G. Herein the second logical signal is transmitted to activate the first electromagnet 224 of the first independent pulley 116A. As a result, the first electromagnet 224 gets activated and starts generating electro-magnetic field. Furthermore, due to effect of as generated electro-magnetic field, the first electromagnet clutch 220 gets engaged with the first electromagnet 224. As a result, the first independent pulley 116A gets engaged with the rotating shaft 214 of the fixed pully 118. Furthermore, due to the rotation of the rotating shaft 214, the first independent pulley 116A also starts rotating, such as through the first electromagnet clutch 220 and the first electromagnet 224. In an implementation, the first electromagnet clutch 220 is configured to rotate the first independent pulley 116A through the second bearing 222. Furthermore, the first independent pulley 116A is already coupled with the first set of slave rollers 104 (of FIG. 1A), for example through the first set of belts 132, which are coupled around the second bearing hub 226. Therefore, due to the rotation of the first independent pulley 116A, each slave roller in the first set of slave rollers 104 also starts rotating, for example through the first set of belts 132. In other words, the motor driven roller 108 is configured to rotate each slave roller from the first set of slave rollers 104 to move the package 130 from the first set of slave rollers 104 towards the second set of slave rollers 106 through the motor driven roller 108.

In an implementation, if at step 710, the package 130 is present in the second set of slave rollers 106, then at step 718, the controller 110 is configured to transmit a third logical signal (e.g., either logic '1' or logic '0') to the motor driven roller 108, such as to activate the second electromagnet 232. As a result, the second electromagnet 232 gets activated and starts generating electro-magnetic field. Furthermore, due to the effect of as the generated electro-magnetic field, the second electromagnet clutch 228 gets engaged with the second electromagnet 232. Therefore, the second independent pulley 116B also gets engaged with the rotating shaft 214 of the fixed pully 118. Furthermore, due to the rotation of the rotating shaft 214, the second independent pulley 116B also starts rotating, such as through the second electromagnet clutch 228 and the second electromagnet 232. In an implementation, the second electromagnet clutch 228 may be configured to rotate the second independent pulley 116B through the third bearing 230. Furthermore, the second independent pulley 116B is already coupled with the second set of slave rollers 106, for example through the second set of belts 133. Therefore, due to the rotation of the second independent pulley 116B, each slave roller in the second set of slave rollers 106 also starts rotating, for example through the second set of belts 133. Therefore, the second independent pulley 116B is configured to rotate each slave roller from the second set of slave rollers 106 through the third bearing hub 234.

In an implementation, if the length along the first axis 138A of the first conveying section that includes the first set of slave rollers 104 is 24-inches, the length along the first axis 138A of the second conveying section that includes the second set of slave rollers 106 is also 24-inches, and width of the motor driven roller 108 along the y-axis 205 is 4-inches. Therefore, the overall length of the conveyor system 102 will be 52 inches. Furthermore, if the length of the package 130 is more than 24-inches (or more than 28 inches), then the package 130 will occupy a large space on the first set of slave rollers 104 as well as on the second set of slave rollers 106. Therefore, at step 720, the controller 110 is configured transmit the first logical signal as well as the second signal to the motor driven roller 108 to selectively engage each of the first independent pully 116A as well as the second independent pulley 116B. In an implementation, if one package is present in the first conveying section and another package is present is the second conveying section, even then at step 720, the controller 110 is further configured transmit the first logical signal as well as the second signal to the motor driven roller 108 to selectively engage each of the first independent pully 116A as well as the second independent pulley 116B.

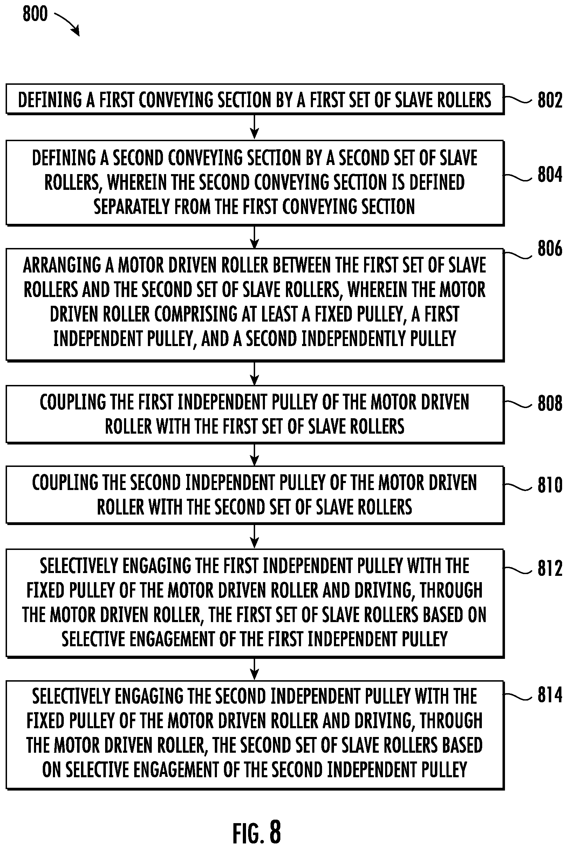

FIG. 8 illustrates a flow chart for a method 800 of controlling the conveyor system 102, according to the present disclosure. As shown in FIG. 8, the flow chart 800 includes steps 802-to-920. In an implementation, the controller 110 of the conveyer system 102 is configured to execute the steps 802-to-814.

At step 802, the method 800 comprises, defining a first conveying section by the first set of slave rollers 104. In an implementation, each slave roller from the first set of slave rollers 104 is conical or cylindrical shaped, which are configured to handle different type of packages, such as cardboard boxes, plastic crates, tires, and lightweight items. Optionally, each slave roller from the first set of slave rollers 104 can be made of a metal, fiber, polymer, plastic, and the like. In one or more embodiments, each slave roller from the first set of slave rollers 104 includes the first end 134A and the second end 134B, such as the first end 134A of each slave roller is arranged on the first frame 126A of the conveyor system 102 and the second end 134B of each slave roller is arranged on the second frame 126B of the conveyor system 102. Therefore, each of the first frame 126A as well as the second frame 126B are used to support each slave roller from the first set of slave rollers 104. In an example, length of the first conveying section along a first axis 138A can vary from 24-inches to 30-inches. In another example, the length of the first conveying section along the first axis 138A can vary from 30-inches to 36-inches. In yet another example, the length of the first conveying section along the first axis 138A can vary from 36-inches to 48-inches.

At step 804, the method 800 comprises, defining a second conveying section by the second set of slave rollers 106, wherein the second conveying section is defined separately from the first conveying section. In an example embodiment, each slave roller from the first set of slave rollers 104 as well as from the second set of slave rollers 106 may be referred to as slave rollers, which does not include any internal motor. Moreover, each slave roller from the first set of slave rollers 104 as well as from the second set of slave rollers 106 can be rotated in clockwise as well as anticlockwise direction. In one or more embodiments, each slave roller from the second set of slave rollers 106 includes the third end 136A and the fourth end 136B, such as the third end 136A of each slave roller is arranged on the first frame 126A of the conveyor system 102 and the fourth end 136B of each slave roller is arranged on the second frame 126B of the conveyor system 102. Therefore, each of the first frame 126A as well as the second frame 126B can be used to hold each slave roller from the second set of slave rollers 106. In an example, a length of the second conveying section along the second x-axis 138B can vary from 24-inches to 30-inches. In another example, the length of the second conveying section along the second x-axis 138B can vary from 30-inches to 36-inches. In yet another example, the length of the second conveying section along the second x-axis 138B can vary from 36-inches to 48-inches. Optionally, the length of the second conveying section along the second x-axis 138B can be equal or different from the length of the first conveying section along the first x-axis 138A.

At step 806, the method 800 comprises, arranging the motor driven roller 108 between the first set of slave rollers 104 and the second set of slave roller 106, such as the motor driven roller 108 includes at least the fixed pulley 118, the first independent pulley 116A, and the second independent pulley 116B. In an example embodiment, the motor driven roller 108 may be coupled to the first set of slave roller 104 and the second set of slave roller 106. In some examples, the motor driven roller 108 may be configured to drive the first set of slave rollers 104 and the second set of slave roller 106. In an example embodiment, the motor driven roller 108 is configured to drive at least one of the first set of slave rollers 104 or the second set of slave rollers 106 based on selective engagement of at least one of the first independent pulley 116A or the second independent pulley 116B. Examples of implementations of each of the first independent pulley 116A and the second independent pulley 116B may include but are not limited to a 'o' shaped pulley, a 'v' shaped pulley, a poly 'o' belt pulley, a poly 'v' belt pulley, or a timer belt, without limiting the scope of the present disclosure. In an example embodiment, the motor driven roller 108 may correspond to the shaft of a motor itself. In another embodiment, the motor driven roller 108 may correspond to a set of pulleys that may be driven by the motor, without departing from the scope of the disclosure. Accordingly, the motor driven roller 108 may correspond to any mechanism that is capable of driving the first set of slave roller 104 and the second set of slave rollers 106. In one or more embodiments, the motor driven roller 108 includes the fifth end 140A and the sixth end 140B. In such embodiment, the fifth end 140A of the motor driven roller 108 is coupled with the first frame 126A of the conveyor system 102 and the sixth end 140B of the motor driven roller 108 is coupled with the second frame 126B of the conveyor system 102. Therefore, each of the first frame 126A as well as the second frame 126B provides support to the motor driven roller 108. Furthermore, in such embodiment, the belt 120 is coupled with the fixed pulley 118 of the motor driven roller 108, such as the belt 120 is used to rotate the motor driven roller 108 through the fixed pulley 118. In some examples, the scope of the disclosure is not limited to the motor driven roller 108 having one fixed pully. In an alternative embodiment, the motor driven roller 108 may include more than one fixed pulley 118.

At step 808 the method 800 comprises, coupling the first independent pulley 116A of the motor driven roller 108 with the first set of slave rollers 104. At step 810, the method 800 comprises, coupling the second independent pulley 116B of the motor driven roller 108 with the second set of slave rollers 106. In accordance with an embodiment, the method 800 comprises, coupling the first independent pulley 116A with each slave roller from the first set of slave rollers 104 through the first set of belts 132and coupling the second independent pulley 116B with each slave roller from the second set of slave rollers 106 through the second set of belts 133. In an implementation, the first independent pulley 116A is coupled with the first set of slave rollers 104 through the first set of belts 132. In an implementation, the second independent pulley 116B is coupled with the second set of slave rollers 106 through the second set of belts 133.

In one or more embodiments, the method 800 comprises, receiving an upstream photo eye signal from the upstream photo eye sensor 121 (of FIG. 1A) based on the presence of the package 130 in proximity of the first set of slave rollers 104 and in response to the upstream photo eye signal, driving the motor driven roller 108 through the fixed pulley 118. In an implementation, the upstream photo eye sensor 121 (of FIG. 1A) is configured to determine the presence of the package 130 on the upstream conveyor system 128 and in a proximity region of the first set of slave rollers 104, as previously described in FIG. 1A. Thereafter, the upstream photo eye sensor 121 is configured to transmit the upstream photo eye signal to the controller 110. In an implementation, in response to the downstream photo eye signal, the controller 110 is configured to transmit a first logical signal (e.g., either logic '1' or logic '0') to the motor driven roller 108, due to which, the rotating shaft 214 starts rotating. In addition, the rotating shaft 214 is configured to drive the motor driven roller 108, such as through the first bearing 216 and the first bearing hub 212, which is further connected to the belt 120A. In accordance with an embodiment, the method 800 further comprises, driving the motor driven roller 108 through the inbuilt motor 202 of the motor driven roller 108 and through the fixed pulley 118. In accordance with an embodiment, the method 800 further comprises, driving the motor driven roller 108 through the external motor 422 and through the fixed pulley 118, such as the external motor 422, which is connected with the motor driven roller 108.

At step 812, the method 800 comprises, selectively engaging the first independent pulley 116A with the fixed pulley 118 of the motor driven roller 108 and driving, through the motor driven roller 108, the first set of slave rollers 104 based on selective engagement of the first independent pulley 116A. In accordance with an embodiment, the method 800 further comprises, controlling the motor driven roller 108 for activating the first electromagnet 224 of the first independent pulley 116A. The first electromagnet 224 is activated for selectively engaging the first independent pulley 116A with the rotating shaft 214 of the motor driven roller 108 through the first electromagnet clutch 220 and for driving each slave roller from the first set of slave rollers 104 through the second bearing 222, the second bearing hub 226, and the first set of belts 132. In an implementation, the method 800 comprises, transmitting, by the controller 110 a second logical signal (e.g., either logic '1' or logic '0') to the motor driven roller 108. In an implementation, the second logical signal is transmitted for controlling the motor driven roller 108, such as for activating the first electromagnet 224 of the first independent pulley 116A. As a result, the first electromagnet 224 gets activated and starts generating electro-magnetic field. In an implementation, due to effect of as generated electro-magnetic field, the first electromagnet clutch 220 gets engaged with the first electromagnet 224. As a result, the first independent pulley 116A gets engaged with the rotating shaft 214 of the fixed pully 118. Furthermore, due to the rotation of the rotating shaft 214, the first independent pulley 116A also starts rotating, such as through the first electromagnet clutch 220 and the first electromagnet 224. As a result, the motor driven roller 108 is configured to rotate each slave roller from the first set of slave rollers 104 to move the package 130 from the first set of slave rollers 104 towards the second set of slave rollers 106 through the motor driven roller 108.

At step 814, the method 800 comprises, selectively engaging the second independent pulley 116B with the fixed pulley 118 of the motor driven roller 108 and driving, through the motor driven roller 108, the second set of slave rollers 106 based on selective engagement of the second independent pulley 116B. In accordance with an embodiment, the method 800 further comprises, receiving a first photo eye signal from the first photo eye sensor 122A based on the presence of the package 130 on the first set of slave rollers 104. Moreover, in response to the first photo eye signal, controlling the motor driven roller 108 for activating the second electromagnet 232 of the second independent pulley 116B. The second electromagnet 232 is activated for selectively engaging the second independent pulley 116B with the rotating shaft 214 of the motor driven roller 108 through the second electromagnet clutch 228 and for driving each slave roller from the second set of slave rollers 106 through the third bearing 230, the third bearing hub 234, and the second set of belts 133. In an implementation, the controller 110 is configured to receive a first photo eye signal from the first photo eye sensor 122A based on the presence of the package 130 on the first set of slave rollers 104. Thereafter, in response to the first photo eye signal, the controller 110 is configured to continue rotation of the motor driven roller 108 through the fixed pulley 118 as well as through the first set of pulleys 426 that are coupled with the external motor 422. In an implementation, in response to the first photo eye signal, the controller 110 may be configured to transmit a third logical signal (e.g., either logic '1' or logic '0') to the motor driven roller 108. In an implementation, the third logical signal is transmitted to control the motor driven roller 108, such as to activate the second electromagnet 232. As a result, the second electromagnet 232 gets activated and starts generating electro-magnetic field. Furthermore, due to the effect of as the generated electro-magnetic field, the second electromagnet clutch 228 gets engaged with the second electromagnet 232. Therefore, the second independent pulley 116B also gets engaged with the rotating shaft 214 of the fixed pully 118. Furthermore, due to the rotation of the rotating shaft 214, the second independent pulley 116B also starts rotating, as previously described in FIG. 2F and FIG. 2G. Furthermore, the second independent pulley 116B is already coupled with the second set of slave rollers 106, for example through the second set of belts 133. Therefore, due to the rotation of the second independent pulley 116B, each slave roller in the second set of slave rollers 106 also starts rotating, for example through the second set of belts 133. As a result, the motor driven roller 108 is configured to drive each slave roller from the second set of slave rollers 106, such as to move the package 130 from first set of slave rollers 104 towards the second set of slave rollers 106 and also from the second set of slave rollers 106 towards the subsequent conveyor system 402.

In accordance with an embodiment, the method 800 further comprises, receiving a second photo eye signal from the second photo eye sensor 122B based on the presence of the package 130 on the second set of slave rollers 106. In accordance with an embodiment, the method 800 further comprises, determining, through the first photo eye sensor 122A, if the package 130 is present on the first set of slave rollers 104 and in response to presence of the package 130. In addition, the method 800 comprises, controlling the motor driven roller 108 to continue engagement of the first independent pulley 116A with the rotating shaft 214 of the motor driven roller 108 to drive each slave roller from the first set of slave rollers 104. In accordance with an embodiment, the method 800 further comprises, determining, through the first photo eye sensor 122A, if the package 130 is not present on the first set of slave rollers 104. Moreover, in response to absence of the package 130, controlling the motor driven roller 108 for deactivating the first electromagnet 224 of the first independent pulley 116A. The first electromagnet 224 is deactivated for disengaging the first independent pulley 116A from the rotating shaft 214 of the motor driven roller to stop driving each slave roller from the first set of slave rollers 104. In an implementation, in response to the absence of the package 130 on the first set of slave rollers 104, the controller 110 may be configured to transmit a fourth logical signal

(e.g., either logic '1' or logic '0') to the motor driven roller 108. Herein the fourth logical signal is different from each of the first logical signal, the second logical signal, and the third logical signal. Furthermore, the fourth logical signal is transmitted to control the motor driven roller 108, such as to deactivate the first electromagnet 224 of the first independent pulley 116A. Therefore, the first electromagnet 224 will stop generating the electro-magnetic field. Furthermore, due to the absence of the electro-magnetic field, the first electromagnet 224 gets disengaged from the first electromagnet clutch 220. As a result, the motor driven roller 108 is configured to disengage the first independent pulley 116A from the rotating shaft 214 of the fixed pulley 118, due to which the first electromagnet clutch 220 stops rotating the first independent pulley 116A. Therefore, due to disengagement from the rotating shaft 214, the first independent pulley 116A stop rotating, due to which each slave roller from the first set of slave rollers 104 also stop rotating. Therefore, due to the absence of the electro-magnetic field, the first independent pulley 116A also gets disengaged (i.e., not connected) and stop rotation of each slave roller from the first set of slave rollers 104. Beneficially as compared to conventional approaches, the first independent pulley 116A can be used to precisely control and precisely drive each slave roller from the first set of slave rollers 104. However, due to the rotation of the second independent pulley 116B, the package 130 can be shifted from the second set of slave rollers 106 towards the subsequent conveyor system 402, while each slave roller from the first set of slave rollers 104 remains in steady state and does not rotate.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments can be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

It is to be appreciated that 'one or more' includes a function being performed by one element, a function being performed by more than one element, e.g., in a distributed fashion, several functions being performed by one element, several functions being performed by several elements, or any combination of the above.

Moreover, it will also be understood that, although the terms first, second, etc. are, in some instances, used herein to describe various elements, these elements should not be limited by these terms. These terms are only used to distinguish one element from another. For example, a first frame could be termed a second frame, and, similarly, a second frame could be termed a first frame, without departing from the scope of the various described embodiments. The first frame and the second frame are both frames, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

The hardware used to implement the various illustrative logics, logical blocks, modules, and circuits described in connection with the aspects disclosed herein can include a general purpose processor, a digital signal processor (DSP), a special-purpose processor such as an application specific integrated circuit (ASIC) or a field programmable gate array (FPGA), a programmable logic device, discrete gate or transistor logic, discrete hardware components, or any combination thereof designed to perform the functions described herein. A general-purpose processor can be a microprocessor, but, in the alternative, the processor can be any processor, controller, microcontroller, or state machine. A processor can also be implemented as a combination of computing devices, e.g., a combination of a DSP and a microprocessor, a plurality of microprocessors, one or more microprocessors in conjunction with a DSP core, or any other such configuration. Alternatively, or in addition, some steps or methods can be performed by circuitry that is specific to a given function.

In one or more example embodiments, the functions described herein can be implemented by special-purpose hardware or a combination of hardware programmed by firmware or other software. In implementations relying on firmware or other software, the functions can be performed as a result of execution of one or more instructions stored on one or more non-transitory computer-readable media and/or one or more non-transitory processor-readable media. These instructions can be embodied by one or more processor-executable software modules that reside on the one or more non-transitory computer-readable or processor-readable storage media. Non-transitory computer-readable or processor-readable storage media can in this regard comprise any storage media that can be accessed by a computer or a processor. By way of example but not limitation, such non-transitory computer-readable or processor-readable media can include random access memory (RAM), read-only memory (ROM), electrically erasable programmable read-only memory (EEPROM), FLASH memory, disk storage, magnetic storage devices, or the like. Disk storage, as used herein, includes compact disc (CD), laser disc, optical disc, digital versatile disc (DVD), floppy disk, and Blu-ray disc^{™}, or other storage devices that store data magnetically or optically with lasers. Combinations of the above types of media are also included within the scope of the terms non-transitory computer-readable and processor-readable media. Additionally, any combination of instructions stored on the one or more non-transitory processor-readable or computer-readable media can be referred to herein as a computer program package.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components can be used in conjunction with the supply management system. Therefore, it is to be understood that the inventions are not to be limited to the specific embodiments disclosed and that modifications and other embodiments are intended to be included within the scope of the appended claims. Moreover, the steps in the method described above can not necessarily occur in the order depicted in the accompanying diagrams, and in some cases one or more of the steps depicted can occur substantially simultaneously, or additional steps can be involved. Although specific terms are employed herein, they are used in a generic and descriptive sense only and not for purposes of limitation.

It is intended that the specification and examples be considered as exemplary only, with a true scope and spirit of the disclosure being indicated by the following claims.

## Claims

1. A conveyor system comprising:
a first set of slave rollers defining a first conveying section;
a second set of slave rollers defining a second conveying section separate from the first conveying section; and
a motor driven roller (MDR) comprising at least a fixed pulley, a first independent pulley, and a second independent pulley, wherein the first independent pulley is coupled with the first set of slave rollers and the second independent pulley is coupled with the second set of slave rollers, and wherein the motor driven roller is configured to drive at least one of the first set of slave rollers or the second set of slave rollers based on selective engagement of at least one of the first independent pulley or the second independent pulley.

2. The conveyor system of claim 1, wherein the first independent pulley is coupled with each slave roller from the first set of slave rollers through a first set of belts and the second independent pulley is coupled with each slave roller from the second set of slave rollers through a second set of belts.

3. The conveyor system of claim 2, wherein the fixed pulley comprises at least a first bearing hub, a first bearing, and a rotating shaft.

4. The conveyor system of claim 3, wherein the first independent pulley comprises at least a first electromagnet clutch, a first electromagnet, a second bearing, and a second bearing hub.

5. The conveyor system of claim 4, wherein the second independent pulley comprises a second electromagnet clutch, a second electromagnet, a third bearing, and a third bearing hub.

6. The conveyor system of claim 1, is further connected to a controller, wherein, the controller is configured to receive an upstream photo eye signal from an upstream photo eye sensor based on a presence of a package in proximity of the first set of slave rollers and in response to the upstream photo eye signal, the controller is further configured to drive the motor driven roller through the fixed pulley.

7. The conveyor system of claim 4, is further connected to a controller, wherein, the controller is configured to control the motor driven roller to activate the first electromagnet of the first independent pulley, wherein the first electromagnet is activated to selectively engage the first independent pulley with the rotating shaft of the motor driven roller through the first electromagnet clutch and to drive each slave roller from the first set of slave rollers through the second bearing, the second bearing hub, and the first set of belts.

8. The conveyor system of claim 6, wherein the motor driven roller comprises an inbuilt motor and the controller is configured to drive the motor driven roller using the inbuilt motor and through the fixed pulley.

9. The conveyor system of claim 6, wherein the motor driven roller is connected to an external motor and the controller is configured to drive the motor driven roller using the external motor and through the fixed pulley.

10. The conveyor system of claim 5, is further connected to a controller, wherein, the controller is further configured to receive a first photo eye signal from a first photo eye sensor based on a presence of a package on the first set of slave rollers and in response to the first photo eye signal, control the motor driven roller to activate the second electromagnet of the second independent pulley, wherein the second electromagnet is activated to selectively engage the second independent pulley with the rotating shaft of the motor driven roller through the second electromagnet clutch and to drive each slave roller from the second set of slave rollers through the third bearing, the third bearing hub, and the second set of belts.

11. The conveyor system of claim 10, wherein, the controller is further configured to receive a second photo eye signal from a second photo eye sensor based on a presence of the package on the second set of slave rollers.

12. The conveyor system of claim 11, wherein, the controller is further configured to determine, through the first photo eye sensor, if the package is present on the first set of slave rollers and in response to presence of the package, control the motor driven roller to continue engagement of the first independent pulley with the rotating shaft of the motor driven roller to drive each slave roller from the first set of slave rollers.

13. The conveyor system of claim 11, wherein, the controller is further configured to determine, through the first photo eye sensor, if the package is not present on the first set of slave rollers and in response to absence of the package, control the motor driven roller to deactivate the first electromagnet of the first independent pulley, wherein the first electromagnet is deactivated to disengage the first independent pulley from the shaft of the motor driven roller to stop driving each slave roller from the first set of slave rollers.

14. The conveyor system of claim 11, wherein the controller is further configured to determine, through the second photo eye sensor, if the package is present on the second set of slave rollers and in response to presence of the package, the controller is further configured to drive each slave roller from the second set of slave rollers based on selective engagement of the second independent pulley.

15. A pulley for a roller of a conveyor system, wherein the pulley comprising:
a fixed pulley comprising a first surface, a second surface, a first bearing hub, a first bearing, and a rotating shaft, wherein the first surface of the fixed pulley functions as a first edge of the pulley;
a first independent pulley comprising a third surface, a fourth surface, a first electromagnet clutch, a first electromagnet, a second bearing, and a second bearing hub, wherein the third surface of the first independent pulley is coupled with the second surface of the fixed pulley; and
a second independent pulley comprising a fifth surface, a sixth surface, a second electromagnet clutch, a second electromagnet, a third bearing, and a third bearing hub, wherein the fifth surface of the second independent pulley is coupled with the fourth surface of the first independent pulley and the sixth surface of the second independent pulley functions as a second edge of the pulley.
